# EUROPEAN PATENT APPLICATION

(11) **EP 3 633 831 A1**
(43) Date of publication of application: **08.04.2020**
(21) Application number: 19200900.9
(22) Date of filing: 01.10.2019
(51) Int. Cl.: H02K 15/02, H01F 3/02

(54) **METHOD OF MANUFACTURING STACK AND APPARATUS FOR MANUFACTURING STACK**

(30) Priority: 05.10.2018 JP 2018190291; 29.05.2019 JP 2019100112
(71) Applicant: Mitsui High-Tec, Inc., Kitakyushu-shi, Fukuoka 807-8588 (JP)
(72) Inventor: Matsunaga, Yukio, Kitakyushu-shi, Fukuoka, 807-8588 (JP); Hasuo, Yusuke, Kitakyushu-shi, Fukuoka, 807-8588 (JP); Eto, Yusuke, Kitakyushu-shi, Fukuoka, 807-8588 (JP); Nakayama, Hayato, Kitakyushu-shi, Fukuoka, 807-8588 (JP); Sakaguchi, Takaya, Kitakyushu-shi, Fukuoka, 807-8588 (JP)
(74) Representative: Vossius & Partner Patentanwälte Rechtsanwälte mbB

(57) **Abstract**

A method of manufacturing a stack includes a sequence of operations including separating a sheet from a temporary stack of sheets, rotating the sheet after it has been separated, and applying an adhesive to the sheet, while it is being rotated, by dispensing the adhesive to a surface of the sheet by at least one dispenser and restacking a plurality of the sheets, to which the adhesive was applied by repeating the sequence of operations, to form a manufactured stack of sheets.

## Description

### BACKGROUND

### 1. Field

The present disclosure relates to a method of manufacturing a stack and an apparatus for manufacturing a stack.

### 2. Disclosure of the Related Art

Japanese Unexamined Patent Publication No. 2009-124828 discloses an apparatus for manufacturing a stacked core obtained by stacking and bonding core sheets formed by being blanked to a predetermined shape from belt-shaped steel sheets. The manufacturing apparatus described in Japanese Unexamined Patent Publication No. 2009-124828 includes an upper die and a lower die, and includes a progressive die unit configured to progressively blank core sheets and an adhesive application unit configured to apply an adhesive to a portion corresponding to a core sheet.

### SUMMARY

The present disclosure provides a method of manufacturing a stack and an apparatus for manufacturing a stack that are effective in improving evenness in applying an adhesive.

A method of manufacturing a stack according to one aspect of the present disclosure includes a sequence of operations including separating a sheet from a temporary stack of sheets, rotating the sheet after it has been separated, and applying an adhesive to the sheet, while it is being rotated, by dispensing the adhesive to a surface of the sheet by at least one dispenser and restacking a plurality of the sheets, to which the adhesive was applied by repeating the sequence of operations, to form a manufactured stack of sheets.

An apparatus for manufacturing a stack according to another aspect of the present disclosure includes a separator configured to separate a sheet from a temporary stack of sheets, an adhesive applicator configured to dispense an adhesive to a surface of the sheet that has been separated by the separator, and a stacker configured to restack a plurality of the sheets to which the adhesive was applied by the adhesive applicator to form a manufactured stack of sheets. The adhesive applicator includes an actuator configured to rotate the sheet after it has been separated by the separator, and at least one dispenser configured to dispense the adhesive to a surface of the sheet while it is being rotated by the actuator.

In the present disclosure, a method of manufacturing a stack and an apparatus for manufacturing a stack that are effective in improving evenness in applying an adhesive is provided.

### BRIEF DESCRIPTION OF THE DRAWINGS

FIG. 1 is a diagram illustrating an example of a stator core.
FIG. 2 is a diagram schematically illustrating an example of an apparatus for manufacturing a stator core according to a first embodiment.
FIG. 3 is a diagram schematically illustrating an example of the bonding device illustrated in FIG. 2.
FIG. 4A is a diagram illustrating an example of an application state of an adhesive and a curing agent.
FIG. 4B is a diagram illustrating an example of an application state of the adhesive and a curing agent.
FIG. 5 is a diagram schematically illustrating an example of a configuration of the adhesive application part illustrated in FIG. 3.
FIG. 6 is a block diagram illustrating a functional configuration of a controller.
FIG. 7 is a block diagram illustrating a hardware configuration of the controller.
FIG. 8 is a flowchart depicting a process performed in the bonding device.
FIG. 9 is a flowchart depicting a process performed in an adhesive application part.
FIG. 10 is a diagram schematically illustrating another configuration example of the adhesive application part.
FIG. 11A is a diagram for describing another example of a method of applying the adhesive.
FIG. 11B is a diagram for describing another example of a method of applying the adhesive.
FIG. 12A is a diagram for describing another example of a method of applying the adhesive.
FIG. 12B is a diagram for describing another example of a method of applying the adhesive.
FIG. 13 is a diagram schematically illustrating a configuration example of the adhesive application part included in an apparatus for manufacturing a stator core according to a second embodiment.
FIG. 14A is a diagram schematically illustrating another configuration example of the adhesive application part.
FIG. 14B is a diagram schematically illustrating another configuration example of the adhesive application part.
FIG. 15A is a diagram schematically illustrating another configuration example of the adhesive application part.
FIG. 15B is a diagram schematically illustrating another configuration example of the adhesive application part.
FIG. 15C is a diagram schematically illustrating another configuration example of the adhesive application part.
FIG. 16 is a schematic diagram of a stack part when viewed from side.
FIG. 17A is a schematic diagram of the stack part when viewed from above.
FIG. 17B is another example of schematic diagram of a stack part when viewed from above.
FIG. 18 is a flowchart depicting an example of a stacking process performed in the stack part.
FIG. 19A is a diagram illustrating an example of application areas of the adhesive on a core piece after being compressed.
FIG. 19B is a diagram illustrating another example of application areas of the adhesive on a core piece after being compressed.
FIG. 19C is a diagram illustrating another example of application areas of the adhesive on a core piece after being compressed.
FIG. 19D is a diagram illustrating another example of application areas of the adhesive on a core piece after being compressed.
FIG. 20A is a diagram illustrating another example of application areas of the adhesive on a core piece after being compressed.
FIG. 20B is a diagram illustrating another example of application areas of the adhesive on a core piece after being compressed.
FIG. 20C is a diagram illustrating another example of application areas of the adhesive on a core piece after being compressed.
FIG. 20D is a diagram illustrating another example of application areas of the adhesive on a core piece after being compressed.

### DETAILED DESCRIPTION

Embodiments will now be described in detail with reference to the drawings. In the description, identical elements or elements having an identical function are designated by identical reference signs, and duplicated explanation may be omitted. The following embodiments will describe a manufacturing apparatus for manufacturing a stator core as a stack, as an example.

### Configuration of Stator Core

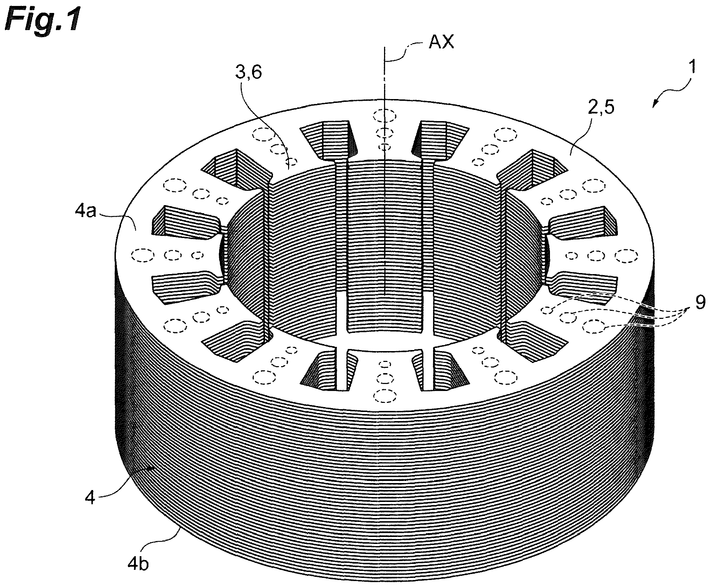

First, with reference to FIG. 1, a configuration of a stator core will be described. A stator core 1 (a stack) illustrated in FIG. 1 is a core for a stator configuring a motor. The stator core 1 includes an annular yoke 2 and a plurality of (for example, 12) teeth 3 protruding from the inner circumferential surface of the yoke 2. The teeth 3 aligns at regular intervals along the circumferential direction the center of which is the center axis AX of the yoke 2.

As illustrated in FIG. 1, the stator core 1 is formed by stacking a plurality of core pieces 4 (a plurality of sheets). Each core piece 4 has a shape corresponding to the stator core 1. The core piece 4 includes a yoke piece 5 corresponding to the yoke 2 and a plurality of teeth pieces 6 corresponding to each of the teeth 3. For example, the width of the each of teeth pieces 6 orthogonal to the protruding direction is formed to be small toward the center axis AX.

Each core piece 4 includes a main surface 4a and a main surface 4b facing opposite directions. In the stator core 1, the core pieces 4 are stacked such that the main surface 4a of one of a pair of core pieces 4 adjacent to each other faces the main surface 4b of the other. The core pieces 4 adjacent to each other in a stacking direction of the core pieces 4 (hereinafter, referred to as "stacking direction") are bonded with each other by an adhesive 9.

### Apparatus for Manufacturing Stator Core

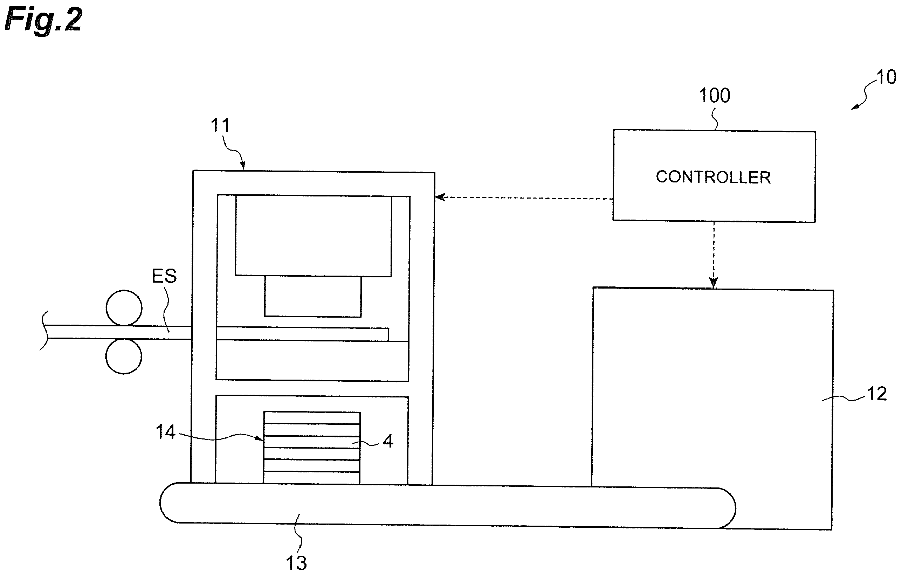

Next, with reference to FIG. 2 to FIG. 5, a manufacturing apparatus 10 for manufacturing the stator core 1 according to the first embodiment will be described. The manufacturing apparatus 10 illustrated in FIG. 2 is an apparatus for manufacturing the stator core 1 by blanking the core pieces 4 from sheet-shaped base material ES made of electrical steel sheet and stacking the blanked core pieces 4. The manufacturing apparatus 10 includes a blanking device 11, a bonding device 12, a transfer device 13, and a controller 100. The blanking device 11, the bonding device 12, and the transfer device 13 operate in accordance with an operation instruction provided by the controller 100.

The blanking device 11 is a press device configured to progressively blank the core pieces 4 from sheet-shaped base material ES. The blanking device 11 forms a temporary stack 14 by stacking a predetermined number of blanked core pieces 4. For example, the blanking device 11 may join the core pieces 4 of the temporary stack 14 with a temporarily-interlocking portion (not illustrated) formed in each of the core pieces 4. The temporary stack 14 is formed by the core pieces 4 being stacked temporarily (for a short time). The blanking device 11 sends the temporary stack 14 to the transfer device 13. The transfer device 13 transfers the temporary stack 14 sent from the blanking device 11 to the bonding device 12.

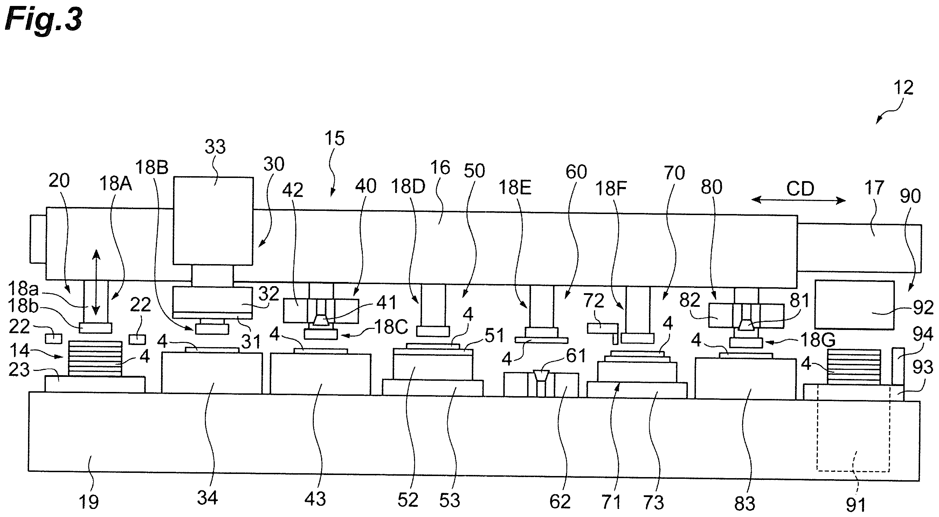

The bonding device 12 is a device configured to form the stator core 1 by removing the core pieces 4 from the temporary stack 14 one by one and bonding the removed core pieces 4 using the adhesive 9. As illustrated in FIG. 3, for example, the bonding device 12 includes a transfer device 15, a separation assistor 20, an applicator 30, an inspector 40, an applicator 50, an inspector 60, an applicator 70 (adhesive applicator), an inspector 80, and a stacker 90. The separation assistor 20, the applicator 30, the inspector 40, the applicator 50, the inspector 60, the applicator 70 , the inspector 80, and the stacker 90 as a plurality of (here, eight) processing parts are disposed along the transfer direction CD in this order. Each of core pieces 4 are processed at each processing part in this order.

The transfer device 15 has a function for transferring the core pieces 4 between the processing parts adjacent to each other. The transfer device 15 includes a moving base 16, a transfer driver 17, and a plurality of (here, seven) holders 18A to 18G. The moving base 16 supports the holders 18A to 18G. The transfer driver 17 is a linear actuator, for example. The transfer driver 17 reciprocates the moving base 16 along the transfer direction CD. Specifically, the transfer driver 17 reciprocates the moving base 16 for a distance between one processing part and the other processing part adjacent to each other.

The holders 18A to 18G are disposed along the transfer direction CD in this order. The holders 18A to 18G move along the transfer direction CD with the movement of the moving base 16. For example, the holder 18A reciprocates between the separation assistor 20 and the applicator 30 with the movement of the moving base 16. The holders 18B to 18G also reciprocate between one processing part and the other processing part adjacent to each other with the movement of the moving base 16. Each of the holders 18A to 18G includes a lifting driver 18a and an attractor 18b. The lifting driver 18a is an air cylinder, for example, and reciprocates the attractor 18b along the vertical direction. The attractor 18b includes an electromagnet, for example, and attracts (holds) a core piece 4 using a magnetic force. The attractor 18b may be configured to attract a core piece 4 using a negative pressure (vacuum). The moving base 16 moves along the transfer direction CD with the holders 18A to 18G holding core pieces 4, and thereby the core pieces 4 are transferred from an upstream processing part to a downstream processing part.

The separation assistor 20 assists in separating core pieces 4 from the temporary stack 14 one by one. The separation assistor 20 includes a blower 22 and a stage 23. The stage 23 is disposed on a placing base 19 of the manufacturing apparatus 10. On the stage 23, the temporary stack 14 is disposed such that the main surfaces 4a of each core piece 4 face up. The movement of the temporary stack 14 disposed on the stage 23 may be regulated by, for example, a jig (not illustrated). The blower 22 is provided to surround the temporary stack 14 disposed on the stage 23. The blower 22 blows air on the temporary stack 14 from the side.

In the separation assistor 20, first, a temporarily-interlocking portion provided to the temporary stack 14 is removed. The blower 22 then blows air on the temporary stack 14. Thus, oil sticking to the temporary stack 14 (each core piece 4) in the blanking device 11 is removed. In other words, the blower 22 cleans the main surfaces 4a and 4b of each of the core pieces 4 without rotating the core pieces 4. By this operation, the core piece 4 that is the top layer of the temporary stack 14 on the stage 23 becomes easily separated from the temporary stack 14.

Subsequently, the holder 18A configured to reciprocate between the separation assistor 20 and the applicator 30 holds one core piece 4. Specifically, the attractor 18b of the holder 18A positioned above the stage 23 moves downward using the lifting driver 18a. After the attractor 18b moves and approaches the temporary stack 14, the attractor 18b of the holder 18A attracts (holds) one core piece 4 positioned on the top of the temporary stack 14. The attractor 18b holding the core piece 4 then moves upward using the lifting driver 18a. By this operation, one core piece 4 is picked (separated) from the temporary stack 14. Subsequently, the separated core piece 4 is carried to the applicator 30 with the movement of the moving base 16. For example, the separation assistor 20 and the holder 18A constitute a separator for separating core pieces 4 from the temporary stack 14 one by one. For example, the separator configured to separate a core piece 4 from the temporary stack 14.

The applicator 30 applies a curing agent 7 (a first curing agent) to the main surface 4a (top surface) of one core piece 4 carried from the separation assistor 20. The applicator 30 includes a pad 31, a liquid source 32, a lifting driver 33, and a stage 34 disposed on the placing base 19. The stage 34 supports a core piece 4 such that the main surface 4a faces up. The pad 31, the liquid source 32, and the lifting driver 33 are disposed above the stage 34. The pad 31 is a porosity pad, which absorbs the curing agent 7, and is formed of a sponge, for example. The pad 31 faces the main surface 4a of a core piece 4 placed on the stage 34. For example, the pad 31 includes a plurality of protrusions (not illustrated) protruding downward (toward the main surface 4a). The liquid source 32 supplies the pad 31 with the curing agent 7. As the curing agent 7, a curing accelerator for accelerating the curing of the adhesive 9 is used. In the present embodiment, the curing agent 7 includes a fluorescent paint. The lifting driver 33 is an air cylinder, for example, and reciprocates the pad 31 in the up-and-down direction.

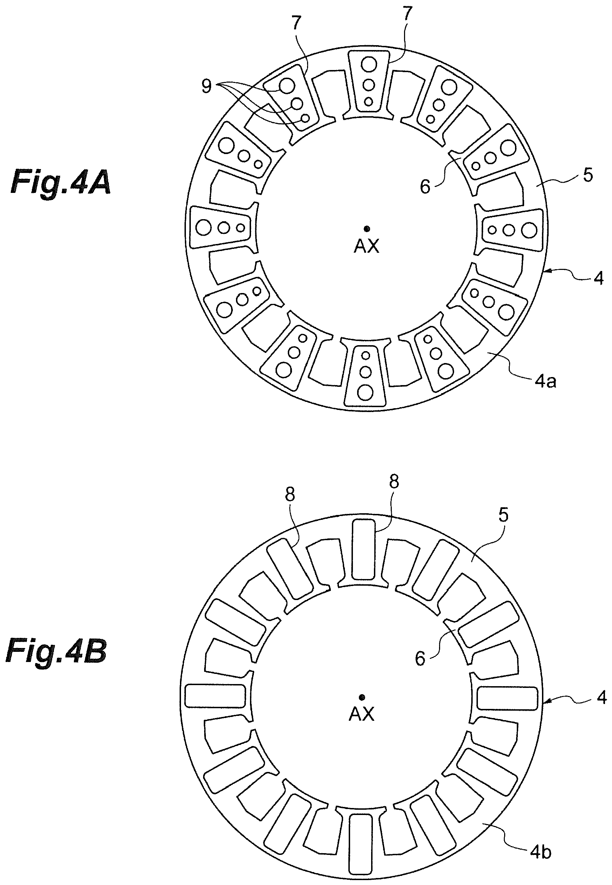

In the applicator 30, one core piece 4 separated by the separation part is installed on the stage 34 such that the main surface 4a faces up. The pad 31 moves downward using the lifting driver 33 and the protrusions of the pad 31 come into contact with the main surface 4a of the core piece 4 on the stage 34, whereby the curing agent 7 is applied to the main surface 4a. For example, as illustrated in FIG. 4A, the curing agent 7 is applied to at least a part of the main surface 4a. The applicator 30 may apply the curing agent 7 all over the main surface 4a. As such, the applicator 30 applies the curing agent 7 to the main surface 4a. The applicator 30 may not apply the curing agent 7 to the main surface 4a of the core piece 4 that is the top layer of the stator core 1. The holder 18B carries the core piece 4 to which the curing agent 7 was applied to the inspector 40.

The inspector 40 inspects an application condition of the curing agent 7 of a core piece 4 whose main surface 4a has the curing agent 7. The inspector 40 includes a camera 41, a ring-shaped light source 42, and a stage 43 disposed on the placing base 19. The stage 43 supports a core piece 4 such that the main surface 4a faces up. The camera 41 and the ring-shaped light source 42 are disposed above the stage 43. The camera 41 produces image data of the main surface 4a by imaging the main surface 4a of the core piece 4 and outputs the this image data to the controller 100. The ring-shaped light source 42 is provided to surround the camera 41. The ring-shaped light source 42 irradiates, toward the main surface 4a of the core piece 4 placed on the stage 43, excitation light for causing the fluorescent paint included in the curing agent 7 to emit. In an acquired image acquired without irradiating excitation light, if a sufficient contrast ratio can be obtained between the core piece 4 and the curing agent 7, the inspector 40 may not include the ring-shaped light source 42. In this case, in the acquired image described above, the inspection may be performed by performing image processing such as binary processing, and the curing agent 7 may not include a paint. The holder 18C carries the core piece 4 to the applicator 50 after its main surface 4a is imaged.

The applicator 50 applies a curing agent 8 (a second curing agent) to the main surface 4b (bottom surface) of one core piece 4 carried from the inspector 40 by the holder 18C. The applicator 50 includes a pad 51, a liquid source 52, and a stage 53 disposed on the placing base 19. The stage 53 supports the pad 51 and the liquid source 52. When a core piece 4 is carried from the inspector 40, the holder 18C holds the core piece 4 such that the main surface 4b faces down. The holder 18C holds the core piece 4 so as not to contact the curing agent 7 applied to the main surface 4a. The pad 51 is a porosity pad, which absorbs the curing agent 8, and is formed of a sponge, for example. The pad 51 faces the main surface 4b of a core piece 4 held by the holder 18C. The pad 51 includes a plurality of protrusions (not illustrated) protruding upward (toward the main surface 4b). The liquid source 52 supplies the pad 51 with the curing agent 8. As the curing agent 8, a curing accelerator for accelerating the curing of the adhesive 9 is used. In the present embodiment, the curing agent 8 includes a fluorescent paint. For example, a concentration (metal ion concentration) of the curing agent 8 may be higher than a concentration (metal ion concentration) of the curing agent 7. The concentration of the curing agent 7 is lower than a concentration of the second curing agent 8.

In the applicator 50, one core piece 4 carried from the inspector 40 is held by the holder 18C in a state in which the main surface 4b faces down. Subsequently, the core piece 4 is lowered by the holder 18C and the main surface 4b of the core piece 4 comes into contact with the protrusions of the pad 51, whereby the curing agent 8 is applied to the main surface 4b. For example, as illustrated in FIG. 4B, the curing agent 8 is applied to at least a part of the main surface 4b. As such, the applicator 50 applies the curing agent 8 to the main surface 4b. The applicator 50 may apply the curing agent 8 all over the main surface 4b of a core piece 4. The applicator 50 may not apply the curing agent 8 to the main surface 4b of the core piece 4 that is the bottom layer of the stator core 1. The holder 18D carries a core piece 4 whose main surface 4b has the curing agent 8 to the inspector 60. For example, the applicator 30, the applicator 50, and the holder 18C constitute a curing agent applicator for applying the curing agents 7 and 8 to both surfaces (main surfaces 4a and 4b) of a core piece 4. For example, the curing agent applicator applies the curing agent of the adhesive 9 to both the surface 4a (first surface) of the core piece 4 and to the surface 4b (second surface) of the core piece 4 located on an opposite side of the sheet.

The inspector 60 inspects an application condition of the curing agent 8 of a core piece 4 whose main surface 4b has the curing agent 8. The inspector 60 includes a camera 61 and ring-shaped light source 62. In the inspector 60, when a core piece 4 is carried from the applicator 50, the holder 18D is holding the core piece 4 in a state in which the main surface 4b faces down. The camera 61 and the ring-shaped light source 62 are positioned below the holder 18D and provided on the placing base 19. The camera 61 produces image data of the main surface 4b by imaging the main surface 4b of the core piece 4 held by the holder 18D and outputs the this image data to the controller 100. The ring-shaped light source 62 irradiates, toward the main surface 4b of the core piece 4 held by the holder 18D, excitation light for causing the fluorescent paint included in the curing agent 8 to emit. In the acquired image acquired without irradiating excitation light, if a sufficient contrast ratio can be obtained between the core piece 4 and the curing agent 8, the inspector 60 may not include the ring-shaped light source 62. In this case, in the acquired image described above, the inspection may be performed by performing image processing such as binary processing, and the curing agent 8 may not include a paint. The holder 18E carries the core piece 4 to the applicator 70 after its main surface 4b is imaged.

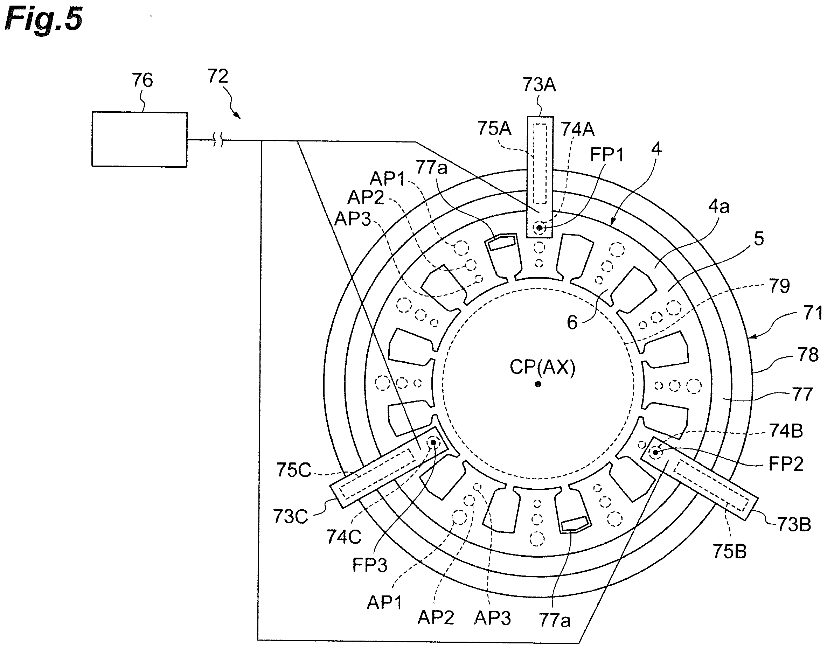

The applicator 70 applies the adhesive 9 to one core piece 4 carried from the inspector 60. In this example, the applicator 70 applies the adhesive 9 to the main surface 4a of a core piece 4 both surfaces (main surfaces 4a and 4b) of which have the curing agents 7 and 8. For example, the applicator 70 configured to dispense the adhesive 7 to the surface 4a of the core piece 4 that has been separated by the separator. For example, the applicator applies the adhesive 9 to the surface 4a of the core piece 4 after applying the curing agent 8 and 9 to both the surfaces 4a and 4b of the core piece 4. The applicator 70 does not apply to the surface 4b of the core piece 4. As the adhesive 9, an acrylic or an epoxy adhesive may be used, for example. As the adhesive 9, an anaerobic adhesive may be used. In the present embodiment, the adhesive 9 is mixed with a fluorescent paint. The applicator 70 applies the adhesive 9 to the main surface 4a of a core piece 4 while rotating the core piece 4 around a center of rotation. The applicator 70 includes a actuator (rotation holder) 71, an adhesive discharger 72, a stage 73 disposed on the placing base 19, and a rotation sensor 79 (see FIG. 5). The actuator 71 is disposed on the stage 73 and rotates a core piece 4 in a state in which the main surface 4a facing up. The adhesive discharger 72 discharges the adhesive 9 to the main surface 4a of the core piece 4 being rotated by the actuator 71. The applicator 70 may not apply the adhesive 9 to the main surface 4a of the core piece 4 that is the top layer of the stator core 1. A detail configuration of the applicator 70 and a method of applying the adhesive 9 performed by the applicator 70 will be described later. The holder 18F carries the core piece 4 to which the adhesive 9 was applied to the inspector 80.

The inspector 80 inspects an application condition of the adhesive 9 of a core piece 4 whose main surface 4a has the adhesive 9. The inspector 80 includes a camera 81, a ring-shaped light source 82, and a stage 83 disposed on the placing base 19. The stage 83 supports a core piece 4 in a state in which the main surface 4a faces up. The camera 81 and the ring-shaped light source 82 are disposed above the stage 83. The camera 81 produces image data of the main surface 4a by imaging the main surface 4a of the core piece 4 supported on the stage 83 and outputs this image data to the controller 100. The ring-shaped light source 82 irradiates, toward the main surface 4a of the core piece 4 positioned on the stage 83, excitation light for causing the fluorescent paint included in the adhesive 9 to emit. In the acquired image acquired without irradiating excitation light, if a sufficient contrast ratio can be acquired between the core piece 4 (curing agent 7) and the adhesive 9, the inspector 80 may not include the ring-shaped light source 82. In this case, in the acquired image described above, the inspection may be performed by performing image processing such as binary processing, and the adhesive 9 may not include a paint. The holder 18G carries the core piece 4 to the stacker 90 after its main surface 4a is imaged.

The stacker 90 restack the core piece 4 to which the applicator 70 applied the adhesive 9. For example, the stacker 90 configured to restack a plurality of the core pieces 4 to which the adhesive 9 was applied by the applicator 70 to form the stator core 1. The stacker 90 includes a jack 91, a receiver 92, a plate 93, and a stack sensor 94. The plate 93 supports the restacked core pieces 4 in a state in which their main surfaces 4a facing up. In the stacker 90, if a core piece 4 carried by the holder 18G is the steel sheet that is the bottom layer of the stator core 1, the core piece 4 is installed on the plate 93. If a core piece 4 carried by the holder 18G is a steel sheet other than the bottom layer of the stator core 1, the core piece 4 is stacked on another core piece 4 on the plate 93. In this manner, the core pieces 4 are restacked in the stacker 90.

The jack 91 and the receiver 92 compress the core pieces 4 placed on the plate 93 every time one core piece 4 is added on the plate 93. The jack 91 is a hydraulic jack, for example, and lifts the plate 93 to press the restacked core pieces 4 against the receiver 92. The receiver 92 is disposed above the plate 93 so as to face the plate 93. The receiver 92 is fixed in a predetermined position. The core pieces 4 on the plate 93 are pressed against the receiver 92, whereby these core pieces 4 are compressed. For example, when the core pieces 4 are compressed, the adhesive 9 applied to the main surface 4a of the core piece 4 that is the second top layer is spread. That is, the adhesive 9 is spread between the main surface 4b of the core piece 4 that is the top layer of the core pieces 4 on the plate 93 and the main surface 4a of the core piece 4 that is the second top layer.

The stack sensor 94 measures the height of the restacked core pieces 4. For example, the stack sensor 94 measures the above-described height by measuring the position of the plate 93 at the time of compression. For example, the stack sensor 94 is a linear scale including a reader and a scale. In the stack sensor 94, a scale is fixed in a stationary position, and a reader is installed so as to be fixed to the plate 93 and to move with the plate 93. The stack sensor 94 outputs information on the measured height to the controller 100. When the height measured by the stack sensor 94 exceeds a predetermined value set in advance (for example, a design lower limit of the stator core 1), the stacker 90 may remove the core pieces 4 on the plate 93. The removed core pieces 4 form a stator core 1 as a stack. In the stacker 90, the core pieces 4 may be compressed by the plate 93 being fixed in a predetermined position and the receiver 92 being reciprocated in an up-and-down direction. In this case, the stacker 90 may include a single stack sensor 94 disposed above the receiver 92. Alternatively, the stacker 90 may include, above the receiver 92, a plurality of (for example, four) the stack sensors 94 disposed along the circumferential direction of the core piece 4 at predetermined intervals. The distances by which the receiver 92 travels may be measured by each of the stack sensors 94 and a mean value of the travel distances may be calculated. Subsequently, the height of the core pieces 4 may be measured by the calculation of a difference value between the height of the receiver 92 and a mean value of the travel distances.

### Adhesive Application Part

Next, with reference to FIG. 5, the details of the applicator 70 configured to apply the adhesive 9 to a core piece 4 will be described. FIG. 5 schematically illustrates the actuator 71 holding one core piece 4. For example, the actuator 71 configured to rotate the core piece 4 after it has been separated by the separator. The actuator 71 includes a rotation stage 77 and a rotation driver 78. The rotation stage 77 is a disc-shaped member, for example, and supports a core piece 4. A core piece 4 is placed on the rotation stage 77 such that at least a part of the main surface 4b contacts the rotation stage 77. A recessed portion may be provided to the rotation stage 77 for preventing the curing agent 8 applied to the main surface 4b from coming into contact with the rotation stage 77. The rotation stage 77 includes a pair of pins 77a for taking a position. The pair of pins 77a extends in the up-and-down direction. For example, the pins 77a fit into slots provided between teeth pieces 6 adjacent to each other. Thus, a core piece 4 is positioned with respect to the rotation stage 77. A notch for positioning may be formed in an outer circumferential edge of a core piece 4. In this case, the rotation stage 77 may include a pin for positioning, at a position corresponding to the notch.

The rotation driver 78 rotates the rotation stage 77 around the rotation center CP (the center of rotation) with the center position of the rotation stage 77 being the rotation center CP. The rotation driver 78 includes a power source such as an electric motor, for example. Examples of the electric motor include a servomotor and a stepping motor. Since a core piece 4 is positioned with respect to the rotation stage 77, the core piece 4 is held by the rotation stage 77 such that the center axis AX of the core piece 4 substantially coincides with the rotation center CP of a rotation made by the actuator 71. The rotation stage 77 is rotated by the rotation driver 78, and accordingly the core piece 4 supported on the rotation stage 77 is rotated around the rotation center CP.

The rotation sensor 79 detects information on a rotation speed and a rotation angle of the rotating core piece 4. The rotation sensor 79 is an encoder, for example. For example, the rotation sensor 79 outputs a pulse signal having a frequency proportional to the rotation speed of the core piece 4.

On a core piece 4, a plurality of application targets AP1, a plurality of application targets AP2, and a plurality of application targets AP3 are set in advance. The application targets AP1, AP2, and AP3 are the portions to which the adhesive 9 is applied. The application targets AP1 are set at predetermined intervals in the circumferential direction so that the adhesive 9 is applied to the yoke piece 5. The application targets AP2 and AP3 are set to correspond to the positions of the teeth pieces 6 so that the adhesive 9 is applied to the teeth pieces 6. The application targets AP1, the application targets AP2, and the application targets AP3 are positioned in this order along the radial direction with the center axis AX being the center. In this example, the number of application targets AP1 is the same as those of the application targets AP2 (the application targets AP3). One of the application targets AP2 and one of the application targets AP3 are provided to each teeth piece 6. In other words, the number of application targets AP2 and the number of application targets AP3 are each the same as the number of teeth pieces 6. The application targets AP1 are set on the portions of the yoke piece 5 where the teeth pieces 6 protrude.

The adhesive discharger 72 includes a plurality of dispensers 73A, 73B, and 73C, and a liquid source 76. The dispenser 73A (yoke adhesive dispenser) is configured to apply the adhesive 9 to the yoke piece 5. The dispenser 73B (teeth adhesive dispenser) and the dispenser 73C (teeth adhesive dispenser) are configured to apply the adhesive 9 to the teeth pieces 6. For example, the dispensers 73A, 73B, and 73C configure to dispense the adhesive 7 to a surface 4a of the core piece 4 while it is being rotated by the actuator 71. The dispensers 73A, 73B, and 73C are provided at different positions around the rotation center CP (the center of rotation of the core piece 4). For example, the dispensers 73A, 73B, and 73C do not rotate with the core piece 4. In other words, the dispensers 73A, 73B, and 73C are provided to be separated from each other along the circumferential direction the center of which is the rotation center CP. In the present embodiment, the dispensers 73A, 73B, and 73C are disposed to be separated from each other by 120 degrees along the circumferential direction the center of which is the rotation center CP. The liquid source 76 supplies the adhesive 9 to each of the dispensers 73A, 73B, and 73C.

The dispensers 73A, 73B, and 73C dispense the adhesive 9 to a plurality of supply positions FP1, FP2, and FP3, respectively, the supply positions FP1, FP2, and FP3 located at different distances from the rotation center CP. The supply positions FP1, FP2, and FP3 are positions where the dispensers 73A, 73B, and 73C respectively discharge the adhesive 9 in plan view. For example, the supply positions FP1, FP2, and FP3 are the points where the main surface 4a of the core piece 4 respectively meet the discharge directions of the adhesive 9 discharged from the dispensers 73A, 73B, and 73C. The supply position FP3, the supply position FP2, and the supply position FP1 are set to have a shorter distance from the rotation center CP in this order. For example, the supply position FP1 of the dispenser 73A (the second dispenser) is located further from the center CP than the supply position FP2 of the dispenser 73B (the first dispenser). The supply position FP1 is located further from the center CP than the supply position FP3 of the dispenser 73C (the first dispenser). The position of the supply position FP1 from the rotation center CP in the radial direction corresponds to the application targets AP1 (targets on the yoke piece) set on the yoke piece 5. The position of the supply position FP2 from the rotation center CP in the radial direction corresponds to the application targets AP2 (targets on the teeth pieces) set on the teeth pieces 6. The position of the supply position FP3 from the rotation center CP in the radial direction corresponds to the application targets AP3 (targets on the teeth pieces) set on the teeth pieces 6.

The dispensers 73A, 73B, and 73C include nozzles(discharge ports) 74A, 74B, and 74C and extruders 75A, 75B, and 75C, respectively. The nozzles 74A, 74B, and 74C are holes for discharging the adhesive 9 contained in the respective dispensers 73A, 73B, and 73C. For example, the center positions of the nozzles 74A, 74B, and 74C in plan view correspond to the respective supply positions FP1, FP2, and FP3. The nozzles 74A, 74B, and 74C face the core piece 4 supported on the rotation stage 77. The nozzles 74A, 74B, and 74C are positioned above the rotation stage 77 so as to be separated from the core piece 4 by a predetermined distance. For example, the distance from the nozzles 74A, 74B, and 74C to the main surface 4a of the core piece 4 supported on the rotation stage 77 may be approximately a few hundreds of µm to a few tens of mm.

The extruders 75A, 75B, and 75C extrude the adhesive 9 contained in the respective dispensers 73A, 73B, and 73C from the respective nozzles 74A, 74B, and 74C. For example, the extruders 75A, 75B, and 75C apply pressure to the adhesive 9 contained in the respective dispensers 73A, 73B, and 73C to cause the respective nozzles 74A, 74B, and 74C to discharge a predetermined amount of droplet of the adhesive 9. The extruders 75A, 75B, and 75C may include a piezoelectric element, which deforms when a voltage is applied. The extruders 75A, 75B, and 75C may be configured to generate a voltage for discharging a predetermined amount of the adhesive 9 with the expansion and contraction movement occurring when a voltage is applied to the respective piezoelectric element.

The dispensers 73A, 73B, and 73C discharge, toward the rotating core piece 4, the adhesive 9 a plurality of times from the supply positions FP1, FP2, and FP3, respectively. The dispensers 73A, 73B, and 73C discharge the adhesive 9 such that the adhesive 9 sticks to the core piece 4 after dropped from the respective nozzles 74A, 74B, and 74C. In other words, the dispensers 73A, 73B, and 73C are contactless dispensers configured to discharge the adhesive 9 such that the adhesive 9 discharged from the nozzles 74A, 74B, and 74C sticks to the core piece 4 after experiencing a state of contacting neither the nozzles 74A, 74B, and 74C nor the core piece 4. The adhesive 9 is dispensed to all of the application targets AP1, AP2, and AP3, and thus the adhesive 9 is applied to the main surface 4a of the core piece 4 as illustrated in FIG. 4A. In this example, the adhesive 9 is dispensed on the curing agent 7 applied to the main surface 4a. The size (area) of the application area of the adhesive 9 in plan view may be smaller than the application area of the curing agent 7.

The dispensers 73A, 73B, and 73C may be configured to each have a different supply amount (discharge amount) of the adhesive 9 discharged from the respective dispensers 73A, 73B, and 73C at a time. For example, an amount of a shot of the adhesive 9 dispensed by the dispenser 73A is larger than an amount of a shot of the adhesive 9 dispensed by the dispenser 73B (the dispenser 73C). For example, the diameters of the nozzles 74A, 74B, and 74C may differ from each other. For example, the nozzle 74A, the nozzle 74B, and the nozzle 74C may be configured to have a bigger diameter in this order. As such, the dispensers 73A, 73B, and 73C may be configured to dispense the larger amount of the adhesive 9 as the distance from the rotation center CP increases.

### Controller

The controller 100 controls the blanking device 11 and the bonding device 12, causing the blanking device 11 and the bonding device 12 to manufacture a stator core 1. For example, the controller 100 is configure to perform a sequence of operations and restacking a plurality of the core pieces 4, to which the adhesive 9 was applied by repeating the sequence of operations, to form the stator core 1. The sequence of operations includes separating a core piece 4 from a temporary stack 14 of the core pieces 4, rotating the core piece 4 after it has been separated, and applying an adhesive 9 to the core piece 4, while it is being rotated, by dispensing the adhesive 9 to a surface 4a of the core piece4 by at least one dispenser.

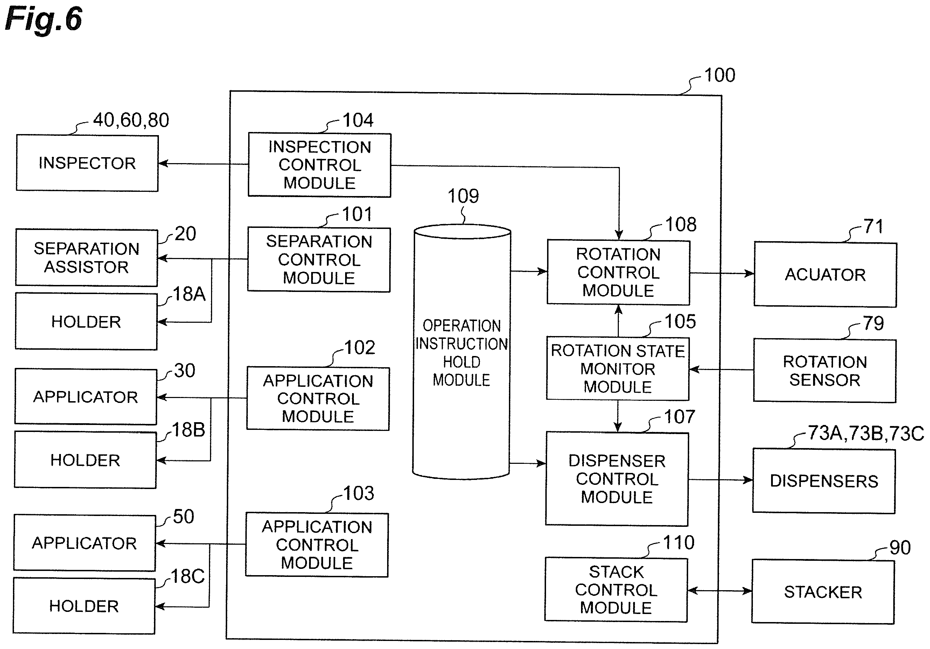

For example, as illustrated in FIG. 6, the controller 100 includes a separation control module 101, an application control module 102, an application control module 103, an inspection control module 104, a rotation state monitor module 105, a dispenser control module 107, a rotation control module 108, and an operation instruction hold module 109, as a functional configuration (hereinafter, referred to as "function modules").

The separation control module 101 controls the separation assistor 20 and the holder 18A, causing the separation assistor 20 and the holder 18A to separate one core piece 4 from the temporary stack 14. For example, the separation control module 101 controls the blower 22, causing the blower 22 to blow air to the temporary stack 14. The separation control module 101 then controls the holder 18A, causing the holder 18A to hold the core piece 4 that is the top layer of the temporary stack 14.

The application control module 102 controls the applicator 30, causing the applicator 30 to apply the curing agent 7 to the main surface 4a of the core piece 4 separated by the separation assistor 20 and the holder 18A. For example, the application control module 102 controls the lifting driver 33, causing the lifting driver 33 to lower the pad 31 until coming into contact with the main surface 4a of the core piece 4 supported on the stage 34.

The application control module 103 controls the applicator 50, causing the applicator 50 to apply the curing agent 8 to the main surface 4b of the core piece 4 separated by the separation assistor 20 and the holder 18A. For example, the application control module 103 controls the holder 18C, causing the holder 18C to lower the core piece 4 until the main surface 4b of the core piece 4 comes into contact with the pad 51.

The operation instruction hold module 109 stores an application operation instruction set in advance. For example, the application operation instruction includes classification information on the core piece 4 that is an application target, position information (for example, an angle from a reference position) on the application targets of the core piece 4, information on a target rotation speed during the application of the adhesive 9, and other information.

The rotation control module 108 rotates the core piece 4 supported on the rotation stage 77 by operating the actuator 71. The rotation control module 108 rotates the core piece 4 using the actuator 71 such that the application targets set on the main surface 4a of the core piece 4 pass the supply position where the adhesive discharger 72 supplies the adhesive 9. For example, the rotation control module 108 rotates the core piece 4 around the center axis AX such that the number of rotations becomes more than one. Accordingly, predetermined application targets AP1 sequentially passes the supply position FP1 of the adhesive 9 dispensed by the dispenser 73A, predetermined application targets AP2 sequentially passes the supply position FP2 of the adhesive 9 dispensed by the dispenser 73B, and predetermined the application targets AP3 sequentially passes the supply position FP3 of the adhesive dispensed by the dispenser 73B.

The rotation control module 108 controls the rotation speed of a core piece 4 rotated by the actuator 71. For example, the rotation control module 108 performs several speed controls including accelerating a rotation speed of the core piece 4 to a target speed, maintaining the rotation speed of the core piece 4 at the target speed during a first period, and decelerating the rotation speed of the core piece 4 from the target speed. Specifically, the rotation control module 108 performs speed-increase control for increasing the rotation speed of the core piece 4 to the target one, speed-maintaining control for maintaining the rotation speed of the core piece 4 at a target one, and speed-reduction control for reducing the rotation speed of the core piece 4. For example, in the speed-maintaining control, the rotation control module 108 rotates the core piece 4 more than a turn in a state in which the rotation speed of the core piece 4 is maintained. In the speed-maintaining control for maintaining the rotation speed of the core piece 4 at a target one, the rotation control module 108 controls the rotation speed of the core piece 4 such that the actual rotation speed of the core piece 4 falls within a range having an upper limit and a lower limit obtained by adding a tolerance to and subtracting the tolerance from the target speed. For example, the rotation control module 108 changes (adjusts) a voltage command value to the rotation driver 78 (electric motor) so as to reduce a difference between the actual rotation speed of the core piece 4 acquired by the rotation state monitor module 105 and the target speed.

The rotation control module 108 may control the actuator 71, causing the actuator 71 to change the rotation angle of the core piece 4 from a rotation start to a rotation end for each core piece 4. For example, the rotation control module 108 may control the actuator 71, causing the rotation angle at a stop (stop complete angle) with respect to the angle of the core piece 4 right after disposed on the rotation stage 77, to be deviated by 120 degrees with respect to the last core piece 4, to which the adhesive 9 has just been applied. The rotation control module 108 may perform the speed-reduction control so that the start angle at which the above-described speed-reduction control starts has a different value from the value of the last core piece 4, to which the adhesive 9 has just been applied. In the above-described speed-reduction control, the rotation control module 108 may reduce the speed of the actuator 71 at a different reduction speed for each core piece 4. For example, the rotation control module 108 may allow the actuator 71 to rotate a first core piece 4 (a first sheet) by a first rotational angle during a first sequence of the operations. The rotation control module 108 may allow the actuator 71 to rotate a second core piece 4 (a second sheet) by a second rotation angle during a second sequence of the operations.

When the rotation control is performed such that the rotation angle at a rotation stop is gradually changed for each core piece 4, the core pieces 4 may be restacked in a state in which the difference of the rotation angles between the core pieces 4 adjacent to each other are maintained, in the stacker 90. Specifically, the difference of the rotation angles when the rotation finishes in the applicator 70 may be maintained after the core piece 4 is carried from the applicator 70 until they are stacked in the stacker 90. For example, stacker 90 restacks the first sheet and the second sheet so that a difference between the first rotation angle and the second rotation angle is maintained in the stator core 1. The maintaining of the rotation angle differences includes a case where all of the core pieces 4 are further rotated by the same degrees from the applicator 70 to the stacker 90. The rotation angle differences may be maintained constant by maintaining the rotation angles of each of the core pieces 4 without further rotating them.

The rotation state monitor module 105 monitors the rotation state of the core piece 4 being rotated by the actuator 71. The rotation state monitor module 105 calculates a rotation speed and a rotation angle of a core piece 4 from a detection value detected by the rotation sensor 79. For example, the rotation state monitor module 105 may calculate a rotation speed using a frequency of a pulse signal input from the rotation sensor 79 and may calculate a rotation angle by counting pulses of the pulse signal.

The dispenser control module 107 allows the adhesive discharger 72 to dispense (discharge) the adhesive 9 every time each of the application targets set on the main surface 4a of the core piece 4 reaches the supply position. Specifically, the dispenser control module 107 allows the dispenser 73A to discharge the adhesive 9 every time each of the application targets AP1 reaches the supply position FP1. For example, the dispenser control module 107 allows the dispenser 73A to dispense a shot of the adhesive 9 in synchronization with an arrival of each of the application targets AP1 to the supply position FP1. The dispenser control module 107 allows the dispenser 73B to discharge the adhesive 9 every time each of the application targets AP2 reaches the supply position FP2. For example, the dispenser control module 107 allows the dispenser 73B to dispense a shot of the adhesive 9 in synchronization with an arrival of each of the application targets AP2 to the supply position FP2. The dispenser control module 107 allows the dispenser 73C to discharge the adhesive 9 every time each of the application targets AP3 reaches the supply position FP3. For example, the dispenser control module 107 allows the dispenser 73C to dispense a shot of the adhesive 9 in synchronization with an arrival of each of the application targets AP3 to the supply position FP3.

The dispenser control module 107 may calculate the timings at which one of the application targets AP1, AP2, and AP3 reaches its respective supply positions FP1, FP2, and FP3, based on information on the rotation speed or the rotation angle of the core piece 4 acquired by the rotation state monitor module 105. For example, in one of the dispensers, when the rotation angle of the core piece 4 reaches the angle for discharging the adhesive 9, the dispenser control module 107 may allow the one dispenser to discharge the adhesive 9. In this case, as an initial position for detecting the rotation angle, the state of the core piece 4 immediately after being installed on the rotation stage 77 may be used. Alternatively, as an initial position for detecting the rotation angle, a state of an indicator (notch, slot, mark, and the like) of the core piece 4 being in a predetermined position may be used. For the detection of the indicator, image data acquired with a camera or other data may be used. The dispenser control module 107 may acquire the angle from the above-described initial position of the core piece 4 as a rotation angle based on a detection value detected by the rotation sensor 79 or an angle command value to the rotation driver 78 (electric motor).

The dispenser control module 107 may allow the adhesive discharger 72 to dispense the adhesive 9 to all of the application targets in a state in which the rotation speed of the core piece 4 is maintained at a target speed described above (hereinafter, referred to as "speed-maintaining control state"). Specifically, the dispenser control module 107 may allow dispenser 73A to discharge the adhesive 9 to all of the application targets AP1 in the speed-maintaining control state. For example, the dispenser control module 107 may allow dispenser 73A to dispense the adhesive 9 to all of the application targets AP1 within the first period while the rotation speed being maintained at the target speed. The dispenser control module 107 may allow the dispenser 73B to discharge the adhesive 9 to all of the application targets AP2 in the speed-maintaining control state. For example, the dispenser control module 107 may allow dispenser 73B to dispense the adhesive 9 to all of the application targets AP2 within the first period. The dispenser control module 107 may allow the dispenser 73C to discharge the adhesive 9 to all of the application targets AP3 in the speed-maintaining control state. For example, the dispenser control module 107 may allow dispenser 73C to dispense the adhesive 9 to all of the application targets AP3 within the first period. For example, in the speed-maintaining control state, when the rotation angle acquired through the rotation state monitor module 105 is right before the angle where the application target portion pass the supply position, the dispenser control module 107 may allow one of the dispensers 73A, 73B, and 73C to discharge the adhesive 9.

The inspection control module 104 inspects each of the application states of the curing agent 7, the curing agent 8, and the adhesive 9 by controlling the inspection parts 40, 60, and 80. For example, the inspection control module 104 respectively causes the ring-shaped light sources 42, 62, and 82 to emit excitation light and to irradiate excitation light to the main surfaces having the curing agent 7, the curing agent 8, and the adhesive 9. The inspection control module 104 respectively acquires image data through the cameras 41, 61, and 81 in a state in which the excitation light is irradiated. The inspection control module 104 compares the acquired image data and reference data, for example, and thereby determines whether the application state of each of the curing agent 7, the curing agent 8, or the adhesive 9 of a core piece 4 to be inspected satisfies a requirement. For example, the core piece 4 to be inspected determined not to satisfy a requirement is excluded from the manufacturing line. In the inspector 80, if a core piece 4 is determined to have an inferior application state of the adhesive 9 and excluded from the manufacturing line, the inspection control module 104 may transmit, to the rotation control module 108, information indicating that that core piece 4 has been excluded. When receiving the information indicating that a core piece 4 has been excluded, the rotation control module 108 may assign the stop complete angle set for that core piece 4 to the next core piece 4 (the core piece 4 to which the adhesive 9 is to be applied after the excluded core piece 4). The core pieces 4 to be inspected determined to satisfy a requirement are carried to a downstream processing part of the inspection parts 40, 60, and 80.

A stack controller 110 controls the stacker 90, causing the stacker 90 to restack the core piece 4 to which the adhesive 9 was applied by the applicator 70.For example, the stack controller 110 controls (drives) the jack 91, causing the jack 91 to compress the core pieces 4 supported on the plate 93 in the vertical direction. For example, when driving the jack 91, the stack controller 110 acquires, from the stack sensor 94, a measured value obtained by measuring the thickness of the core pieces 4 supported on the plate 93 at this point in time.

### Hardware Configuration of Controller

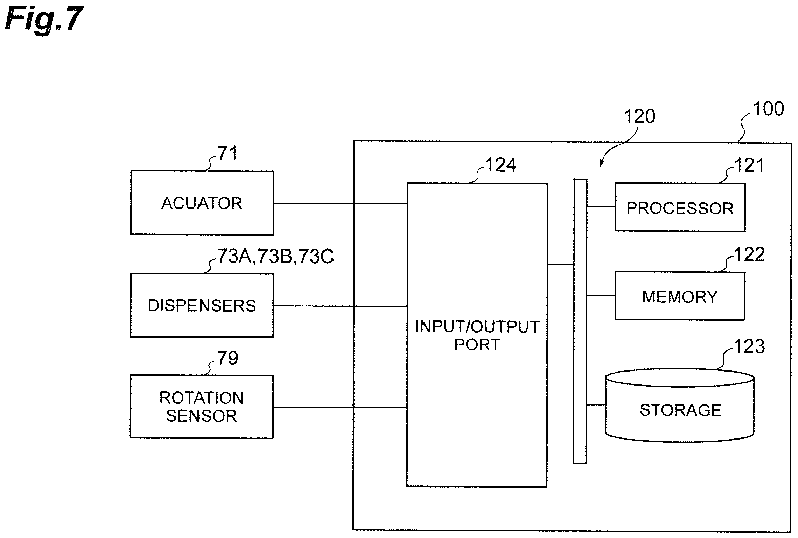

The controller 100 includes one or more computers for controlling. For example, as illustrated in FIG. 7, the controller 100 includes a circuit 120. The circuit 120 includes one or more processors 121, a memory 122, a storage 123, and an input/output port 124. The input/output port 124 inputs and outputs an electric signal to and from the actuator 71, the adhesive discharger 72, the rotation sensor 79, and the like. The storage 123 includes, for example, a storage media readable by a computer, such as hard disk. The storage media stores a computer program for configuring functional modules. The storage media may be a removable media such as a nonvolatile semiconductor memory, a magnetic disk, and an optical disk. The memory 122 temporarily stores a computer program loaded from the storage media of the storage 123 and an operation result made by the processor 121. The processor 121 configures functional modules by running the above-described computer program in cooperation with the memory 122.

The hardware configuration of the controller 100 is not limited to those configuring functional modules by running a computer program. For example, functional modules of the controller 100 may be configured by a dedicated logic circuit or an application specific integrated circuit (ASIC) integrated the dedicated logic circuit.

### Method of Manufacturing Stator Core

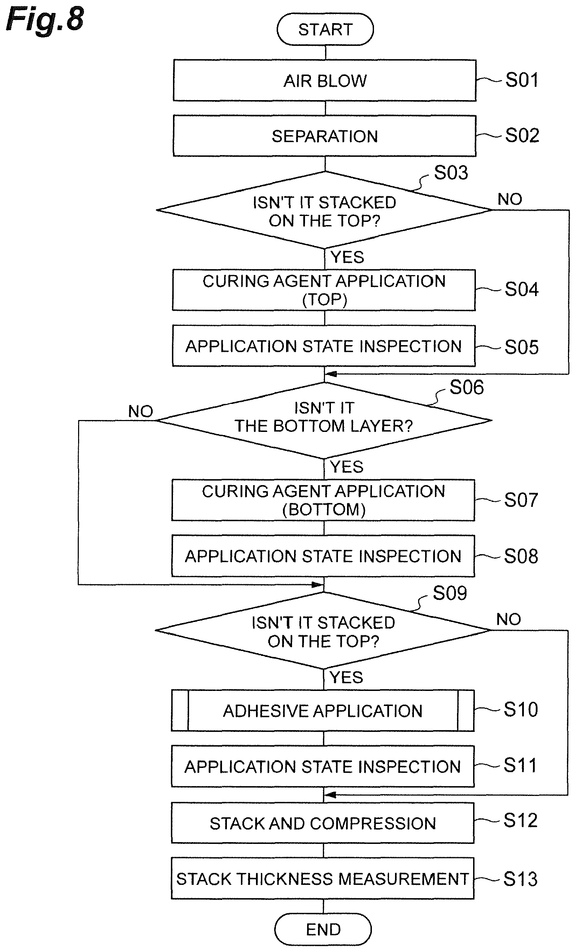

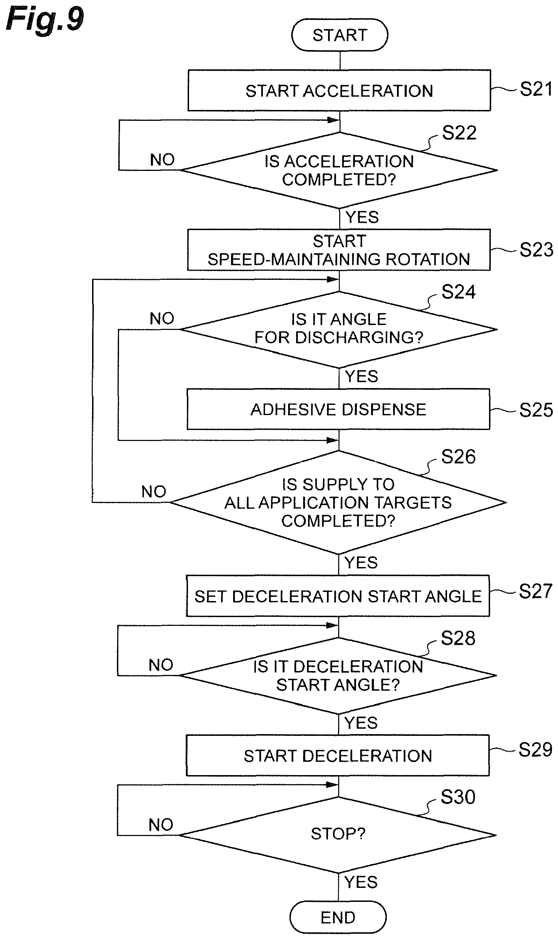

Next, with reference to FIG. 8 and FIG. 9, a bonding process performed by the bonding device 12 in accordance with the control by the controller 100 will be described as an example of a method of manufacturing the stator core 1.

The core pieces 4 blanked by the blanking device 11 are disposed in the separation assistor 20 as the temporary stack 14, whereby the bonding process performed by the bonding device 12 starts. First, the controller 100 performs step S01. In step S01, the separation control module 101 controls the separation assistor 20, causing the blower 22 to blow air to the side of the temporary stack 14.

The controller 100 then performs step S02. In step S02, the separation control module 101 controls the lifting driver 18a and the attractor 18b of the holder 18A, causing the lifting driver 18a and the attractor 18b of the holder 18A to hold the core piece 4 that is the top layer of the temporary stack 14. Specifically, after causing the attractor 18b of the holder 18A to hold the core piece 4 that is the top layer of the temporary stack 14, the separation control module 101 causes the lifting driver 18a to elevate the attractor 18b. By this operation, one of the core pieces 4 is separated from the temporary stack 14.

The controller 100 then performs step S03. In step S03, the application control module 102 checks whether the core piece 4 to which the curing agent 7 is to be applied will not be stacked on the top of the stator core 1 (whether it is not the steel sheet that is the top layer of the stator core 1).

In step S03, when it is determined that the core piece 4 is a steel sheet not to be stacked on the top, the controller 100 performs steps S04 and S05. In step S04, the application control module 102 controls the applicator 30, causing the applicator 30 to apply the curing agent 7 to the main surface 4a of the core piece 4. In step S05, the inspection control module 104 controls the inspector 40, causing the inspector 40 to inspect the application state of the curing agent 7 on the main surface 4a of the core piece 4.

In step S03, when it is determined that the core piece 4 to which the curing agent 7 is to be applied is the steel sheet to be stacked on the top, the controller 100 does not perform steps S04 and S05. In other words, when the core piece 4 to be stacked on the top is carried, the applicator 30 does not apply the curing agent 7 to the top surface (main surface 4a) of that core piece 4. The controller 100 then performs step S06. In step S06, the application control module 103 checks whether the core piece 4 to which the curing agent 8 is to be applied is not the bottom layer of the stator core 1.

In step S06, when it is determined that the core piece 4 is not the bottom layer, the controller 100 performs steps S07 and S08. In step S07, the application control module 103 controls the applicator 50 and the holder 18C, causing the applicator 50 and the holder 18C to apply the curing agent 8 to the main surface 4b of the core piece 4. In step S08, the inspection control module 104 controls the inspector 60, causing the inspector 60 to inspect the application state of the curing agent 8 on the main surface 4b of the core piece 4.

In step S06, when it is determined that the core piece 4 to which the curing agent 8 is to be applied is the bottom layer, the controller 100 does not perform steps S07 and S08. In other words, when the core piece 4 that is the bottom layer is carried, the applicator 50 does not apply the curing agent 8 to the bottom surface (main surface 4b) of that core piece 4. The controller 100 then performs step S09. In step S09, the controller 100 checks whether the core piece 4 to which the adhesive 9 is to be applied is a steel sheet not to be stacked on the top of the stator core 1.

In step S09, when it is determined that the core piece 4 is a steel sheet not to be stacked on the top, the controller 100 performs steps S10 and S11. In step S10, the controller 100 controls the applicator 70, causing the applicator 70 to apply the adhesive 9 to the main surface 4a of the core piece 4. The details of a process of applying the adhesive 9 by the applicator 70 will be described later. In step S11, the inspection control module 104 controls the inspector 80, causing the inspector 80 to inspect the application state of the adhesive 9 on the main surface 4a of the core piece 4.

In step S09, when it is determined that the core piece 4 to which the adhesive 9 is to be applied is the steel sheet to be stacked on the top, the controller 100 does not perform steps S10 and S11. In other words, when the core piece 4 to be stacked on the top is carried, the applicator 70 does not apply the adhesive 9 to the top surface (main surface 4a) of that core piece 4. The controller 100 then performs steps S12 and S13. In step S12, the stack controller 110 controls the stacker 90, causing the stacker 90 to restack the core piece 4 to which the adhesive 9 was applied. For example, when the core piece 4 is restacked, the stack controller 110 controls the stacker 90 (jack 91), causing the stacker 90 (jack 91) to compress the core pieces 4 disposed on the plate 93 in the vertical direction. In step S13, the stack controller 110 acquires, from the stack sensor 94, a measured value obtained by measuring the thickness of the core pieces 4 supported on the plate 93 at this point in time. The controller 100 performs processes from step S01 to step S13 above for each core piece 4. For example, by repeating the processes from step S01 to step S13, the controller 100 performs the sequence of operations and restacking a plurality of the core pieces. The controller 100 may determine whether to remove the stack (core pieces 4) on the plate 93 on the basis of the measured value acquired in step S13. For example, the controller 100 may control the bonding device 12, causing the bonding device 12 to continue to stack new core pieces 4 until the measured value acquired from the stack sensor 94 exceeds a set value set in advance and to remove the stack when the measured value exceeds the set value.

### Process of Applying Adhesive

Next, with reference to FIG. 9, an example of a process of applying the adhesive 9 by the applicator 70 (step S10) will be described. First, the controller 100 performs step S21. In step S21, the rotation control module 108 controls the rotation of the actuator 71, accelerating the core piece 4 in the rotation direction. That is, the rotation control module 108 starts the speed-increase control over the actuator 71.

The controller 100 then performs step S22. In step S22, the rotation control module 108 waits for the rotation speed of the core piece 4 to reach a target speed. The controller 100 then performs step S23. In step S23, the rotation control module 108 starts control for maintaining the rotation speed of the core piece 4 at the target speed. That is, the rotation control module 108 starts the speed-maintaining control over the actuator 71.

The controller 100 then performs step S24. In step S24, the dispenser control module 107 checks whether the rotation angle acquired through the rotation state monitor module 105 is the angle for discharging the adhesive 9 of at least one of the dispensers. In step S24, when it is determined that the rotation angle acquired through the rotation state monitor module 105 is the angle for discharging the adhesive 9, the controller 100 performs step S25. In step S25, the dispenser control module 107 causes one of the dispensers of the adhesive discharger 72 to discharge the adhesive 9 to the application target portion on the core piece 4.

In step S24, when it is determined that the rotation angle acquired from the rotation state monitor module 105 is not the angle for discharging the adhesive 9, the controller 100 does not perform step S25. The controller 100 then performs step S26. In step S26, the dispenser control module 107 checks whether all of the application targets have been dispensed with the adhesive 9. For example, the dispenser control module 107 checks whether all of the application targets AP1, AP2, and AP3 have been dispensed with the adhesive 9.

In step S26, when it is determined that not all of the application targets have been dispensed with the adhesive 9, the process performed by the controller 100 returns to step S24. From then on, the controller 100 repeats steps S24 and S25 until all of the application targets are dispensed with the adhesive 9. In step S26, when it is determined that all of the application targets have been dispensed with the adhesive 9, the controller 100 performs step S27. In step S27, the rotation control module 108 sets the angle for starting to decelerate the core piece 4 being rotated by the actuator 71. Specifically, the rotation control module 108 first sets a stop complete angle such that a rotation angle from a rotation start to a rotation stop is changed for each core piece 4. The rotation control module 108 then calculates a speed-reduction start angle in accordance with the stop complete angle in order to stop the rotation of the core piece 4 at the stop complete angle. For example, the rotation control module 108 may set, as the speed-reduction start angle, a value obtained by adding a predetermined value (for example, 120 degrees) to the speed-reduction start angle at which the adhesive 9 was applied to the last core piece 4. The rotation control module 108 may set the speed-reduction start angle based on what number layer the core piece 4 that is an application target of the adhesive 9 is.

The controller 100 then performs step S28. In step S28, the rotation control module 108 waits for the rotation angle to reach the speed-reduction start angle. The controller 100 then performs step S29. In step S29, the rotation control module 108 reduces the speed of the rotation of the core piece 4. That is, the rotation control module 108 starts the speed-reduction control over the actuator 71.

The controller 100 then performs step S30. In step S30, the controller 100 waits for the rotation of the core piece 4 (actuator 71) to stop. In step S30, when it is determined that the rotation of the core piece 4 has stopped, the controller 100 terminates the process of applying the adhesive 9 to one core piece 4.

### Effects of The Present Embodiment

The manufacturing apparatus 10 for manufacturing the stator core 1 according to the present embodiment includes a separator configured to separate a core piece 4 from a temporary stack 14 of core pieces 4, an applicator 70 configured to dispense an adhesive 9 to a surface 4a of the core pieces 4 that has been separated by the separator and a stacker 90 configured to restack a plurality of the core pieces 4 to which the adhesive 9 was applied by the applicator 70 to form stator core 1. The applicator 70 includes an actuator 71 configured to rotate the core piece 4 after it has been separated by the separator and at least one dispenser configured to dispense the adhesive 9 to a surface 4a of the core piece 4 while it is being rotated by the actuator 71.

The method of manufacturing the stator core 1 according to the present embodiment includes a sequence of operations and restacking a plurality of the core pieces 4, to which the adhesive 9 was applied by repeating the sequence of operations, to form the stator core 1. The sequence of operations includes separating a core piece 4 from a temporary stack 14 of core pieces 4, rotating the core piece 4 after it has been separated, and applying an adhesive 9 to the core pieces 4, while it is being rotated, by dispensing the adhesive 9 to a surface 4a of the core pieces 4 by at least one dispenser.

In the manufacturing apparatus 10 or the manufacturing method described above, the adhesive 9 can be applied to a number of spots in the circumferential direction of the core piece 4 by one and the same dispenser. Thus, the unevenness in application amount can be reduced among a plurality of portions (the application targets AP1, AP2, and AP3) to which the adhesive 9 is applied by one and the same dispenser 73A, 73B, or 73C. As a result, the manufacturing apparatus 10 and the manufacturing method are effective in improving evenness in applying the adhesive 9. In the present embodiment, the temporary stack 14 are formed and thereafter the bonding using the adhesive 9 is performed. Thus, the step of bonding the stator core 1 and the step of forming the temporary stack 14 (for example, the blanking step) can be performed simultaneously. Thus, it is easy to handle both improving evenness in applying an adhesive and improving manufacturing efficiency. However, applying the adhesive 9 while rotating the core piece 4 can be also performed in a die for forming the temporary stack 14. Even when the adhesive 9 is applied to a core piece 4 while the core piece 4 is rotated in a die, the manufacturing apparatus 10 and the manufacturing method are effective in at least improving evenness in applying the adhesive.

The applicator 70 includes the dispensers 73A, 73B, and 73C configured to dispense the adhesive 9 to the supply positions FP1, FP2, and FP3, respectively. The supply positions FP1, FP2, and FP3 have different distances form the rotation center CP of the rotation made by the actuator 71. With this configuration, the adhesive 9 can be simultaneously dispensed to the supply positions having different distances from the rotation center CP. As a result, the manufacturing efficiency of the stator core 1 can be improved.

The dispensers 73A, 73B, and 73C are provided at different positions around the rotation center CP. With this configuration, interferences between the dispensers can be avoided and the number of dispensers can be increased easily. Thus, the dispensers 73A, 73B, and 73C can be applied to form a variety of stator cores 1 (for example, having different sizes or shapes).

In the manufacturing apparatus 10, the rotation control module 108 rotates a core piece 4 using the actuator 71 such that the application targets AP1, AP2, and AP3 set on the main surface 4a of the core piece 4 pass the supply positions FP1, FP2, and FP3 where the adhesive 9 is dispensed by the dispensers 73A, 73B, and 73C. The dispenser control module 107 causes the dispensers 73A, 73B, and 73C to dispense the adhesive 9 every time each of the application targets AP1, AP2, and AP3 reaches the supply positions FP1, FP2, and FP3. In this case, the configuration can be easily adapted when the application targets are predetermined, depending on the shape of the core piece 4.

The rotation control module 108 performs the speed-increase control for increasing the rotation speed of the core piece 4 rotated by the actuator 71 to a target one, the speed-maintaining control for maintaining the rotation speed of the core piece 4 rotated by the actuator 71 at a target one, and the speed-reduction control for reducing the rotation speed of the core piece 4 rotated by the actuator 71. The dispenser control module 107 causes the dispensers 73A, 73B, and 73C to dispense the adhesive 9 to all of the application targets AP1, AP2, and AP3 in a state in which the rotation speed of the core piece 4 is maintained at a target one. With this configuration, the adhesive 9 sticks to the main surface 4a of the core piece 4 rotating at a substantially constant speed. Thus, the effect of rotation on the shape of the applied adhesive 9 formed on the main surface 4a of the core piece 4 are also equalized among the application targets. As a result, evenness in applying an adhesive can be improved.

The rotation control module 108 controls the actuator 71, causing the actuator 71 to gradually change the rotation angles from the rotation start to the rotation end for each core piece 4. The stacker 90 restocks core pieces 4 in a state of maintaining the differences of the rotation angles of the core pieces 4. In this case, in the stacker 90, the core pieces 4 are stacked in a state in which their rotation angles are deviated from each other. That is, the step of applying the adhesive 9 to a core piece 4 while rotating the core piece 4 is applied to stacking core pieces 4 while rotating each of the core pieces 4 by a predetermined angle (rotational stack) in order to reduce unevenness in thickness of each of the core pieces 4. As a result, a rotation device for only the purpose of rotational stack becomes unnecessary, and thus it is effective to simplify the manufacturing apparatus 10.

The dispensers 73A, 73B, and 73C are configured to dispense the larger amount of the adhesive 9 as the distances from the rotation center CP to the supply positions FP1, FP2, and FP3 increase. For example, if the amount of the adhesive 9 is small in a large bonding area, the bonding strength may be insufficient. If the amount of the adhesive 9 is large in a small bonding area, the adhesive 9 may seep. In the above-described configuration, the supply amount of the adhesive 9 increases according to the increase of the bonding area (increase in the circumferential length), whereby the bonding strength may be improved while the seepage is prevented.

In the manufacturing apparatus 10, the application parts 30 and 50 apply the curing agents 7 and 8 of the adhesive 9 to both surfaces (main surface 4a and main surface 4b) of a core piece 4 separated by the separation assistor 20, respectively. The applicator 70 applies the adhesive 9 to the core piece 4 both surfaces of which have the curing agents 7 and 8. In this case, in a pair of core pieces 4 adjacent to each other, curing of the adhesive 9 is accelerated by the curing agents 7 and 8 from both sides that are the main surface 4a and the main surface 4b facing each other. This prevents the adhesive 9 from being uncured and can improve the bonding strength.

The curing agent 7 having a lower concentration is applied to the main surface 4a, to which the adhesive 9 is applied, by the applicator 50, as compared with the main surface 4b, to which the adhesive 9 is not applied. In this case, progress in curing of the adhesive 9 is prevented before the core pieces 4 are bonded together. As a result, the bonding strength can be improved even more.

### Modifications

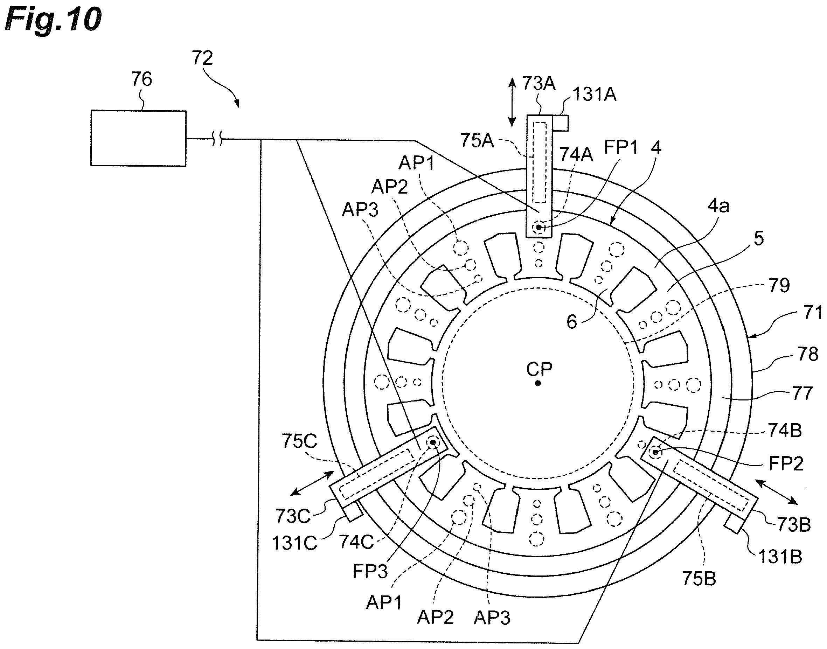

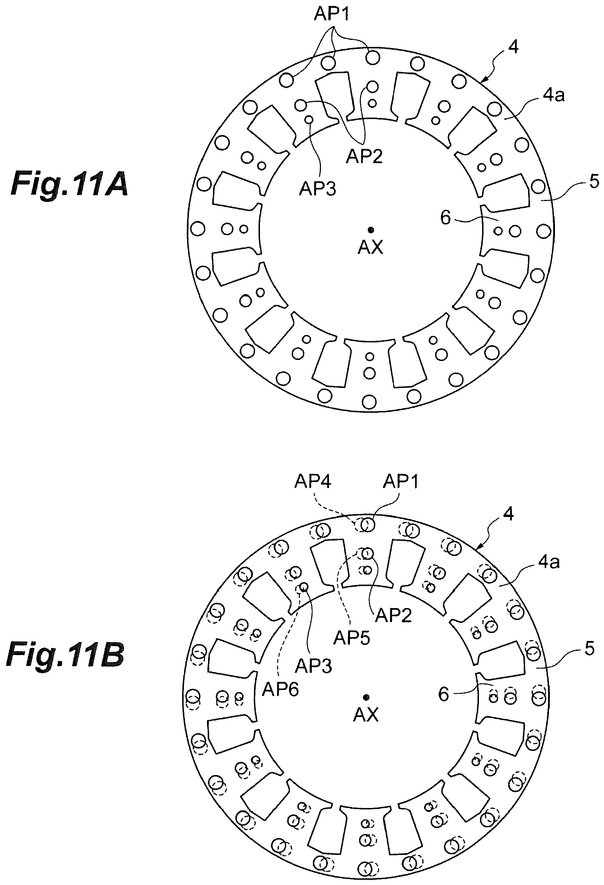

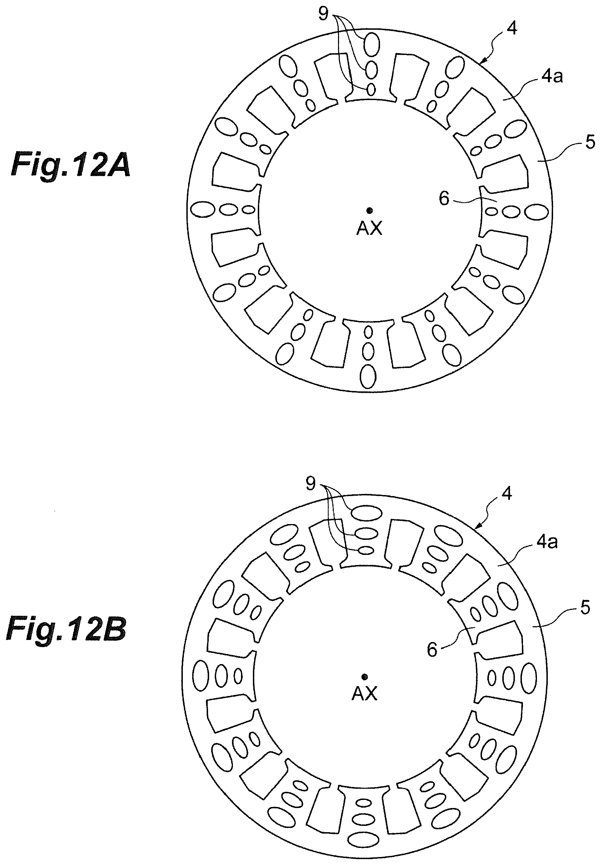

In the foregoing, the first embodiment has been described. However, the present disclosure is not limited to the above-described first embodiment, and various modifications can be made without departing from the gist.
(1) The applicator 70 may be configured to be capable of changing the supply positions of the adhesive 9 in the radial direction of the rotation center CP. For example, as illustrated in FIG. 10, the adhesive discharger 72 may include linear drivers 131A, 131B, and 131C. The linear drivers 131A, 131B, and 131C are linear actuators, for example, and reciprocate the supply positions of the dispensers 73A, 73B, and 73C along the radial direction of the rotation center CP respectively. Thus, the dispensers 73A, 73B, and 73C can dispense the adhesive 9 to any positions of the application targets AP1, AP2, and AP3. The dispensers 73A, 73B, and 73C may reciprocate between a pair of teeth pieces facing each other to sandwich the rotation center CP and between portions of the yoke piece to which the pair of teeth pieces are provided. The dispensers 73A, 73B, and 73C may reciprocate along a direction not passing the rotation center CP. With this configuration, the adhesive 9 can be applied to core pieces 4 of many sizes. In addition, the adhesive 9 can be applied so as to extend in the radial direction of the rotation center CP with the movement of the supply positions.
(2) When a dispenser can reciprocate along the radial direction of the rotation center CP, the applicator 70 may dispense the adhesive 9 to application targets having different distances from the rotation center CP and different positions in the circumferential direction, with the rotation (pivot) of a core piece 4 and the movement of the dispenser. For example, after the adhesive 9 was applied to a first application target portion, the dispenser control module 107 and the rotation control module 108 may cause the core piece 4 to rotate and cause the adhesive 9 to be applied to a second application target portion. The dispenser control module 107 may then move the supply position of the dispenser to a third application target portion closer to the rotation center CP than the second application target portion is. The dispenser control module 107 and the rotation control module 108 may apply, in a predetermined order, the adhesive 9 to application targets having different distances from the rotation center CP and different positions in the circumferential direction with such a combination of the rotation (pivot) of a core piece 4 and the movement of a dispenser. In the adhesive discharger 72, a dispenser may be configured to be movable along a direction orthogonal to the radial direction of the rotation center CP in addition to the radial direction. In this case, the applicator 70 may dispense, in a predetermined order, the adhesive 9 to application targets having different distances from the rotation center CP and different positions in the circumferential direction without the rotation of a core piece 4 but with the movement of a dispenser.
(3) The dispenser control module 107 may control the dispensers 73A, 73B, and 73C, causing the supply amount of the adhesive 9 to increase with the distances from the rotation center CP to the supply positions FP1, FP2, and FP3. For example, the dispenser control module 107 may regulate the above-described supply amount by adjusting a voltage to be applied to a piezoelectric element of each of the dispensers and increasing a discharge pressure of the adhesive 9 as the distances from the rotation center CP increase. For example, the dispenser control module 107 may regulate the above-described supply amount by adjusting the number of times of discharge at each of the supply positions (for example, increasing the number of times of discharge at the supply positions FP1). For example, the dispenser control module 107 may control the dispenser 73A, causing the dispenser 73A to discharge the adhesive 9 twice to each of the application targets AP1 while the core piece 4 rotates more than two turns. With this configuration, the supply amount of the adhesive 9 increases with the increase of the bonding area (increase in the circumferential length), and consequently the bonding strength can be improved while the seepage is prevented.
(4) As illustrated in FIG. 11A, the number of application targets AP1 and the number of application targets AP2 (application targets AP3) set on the main surface 4a of a core piece 4 may be different. For example, the number of application targets AP1 may be greater than that of application targets AP2 (application targets AP3). As an example, the number of application targets AP1 (for example, 24) may be twice the number of application targets AP2 (application targets AP3) (for example, 12). In this case, the dispenser control module 107 may control the dispensers 73A, 73B, and 73C, causing the number of application targets AP1 dispensed with the adhesive 9 by the dispenser 73A to be greater than the number of application targets AP2 (application targets AP3) dispensed with the adhesive 9 by the dispenser 73B (dispenser 73C). In a stator core (core for a stator), an area of a yoke piece is generally larger than that of teeth pieces. Thus, a yoke piece having a small amount of the adhesive 9 may lead to an insufficient bonding strength, and teeth pieces having a large amount of the adhesive 9 may cause an excess adhesive 9 to seep. In the configuration and the manufacturing method described above, the number of application targets for the adhesive 9 increases with the increase of the bonding areas. Consequently, the above-described configuration and manufacturing method can improve the bonding strength while preventing the seepage.
(5) As illustrated in FIG. 11B, a plurality of application targets AP4, AP5, and AP6 may be set on the main surface 4a of a core piece 4, in addition to the application targets AP1, AP2, and AP3. The application targets AP1 and the application targets AP4 at least partially overlap each other. The application targets AP2 (the application targets AP3) and the application targets AP5 (the application targets AP6) at least partially overlap each other, respectively. In other words, the application targets AP1, AP2, and AP3 and the application targets AP4, AP5, and AP6 may coincide or may be displaced from each other in the circumferential direction, respectively. For example, the application targets AP1 may deviate from the application targets AP4. The application targets AP2 (the application target AP3) may deviate from the application targets AP5 (the application target AP6). In this case, the rotation control module 108 may control the actuator 71, causing the actuator 71 to rotate a core piece 4 at least two turns. For example, the core piece 4 rotates several turns including a first turn and a second turn. The dispenser control module 107 may control the dispensers 73A, 73B, and 73C, causing the dispensers 73A, 73B, and 73C to dispense the adhesive 9 to the application targets (targets for the first turn) AP1, AP2, and AP3 during the first turn of a core piece 4 and to dispense the adhesive 9 to the application targets (targets for the second turn) AP4, AP5, and AP6 during the second turn of the core piece 4. For example, the dispenser control module 107 may cause the dispensers 73A, 73B and 73C to dispense a shot of the adhesive 9 in synchronization with an arrival of each of the targets AP1, AP2, and Ap3 to the supply position FP1, FP2 and FP3. The dispenser control module 107 may cause dispenser 73A, 73B and 73C to dispense a shot of the adhesive 9 in synchronization with an arrival of each of the targets AP4, AP5, and AP6 to the supply position FP1, FP2 and FP3.
   As described above, the dispenser control module 107 performs control such that the application targets AP1, AP2, and AP3 and the application targets AP4, AP5, and AP6 at least partially overlap each other, respectively, and thereby the supply amount of the adhesive 9 can be more widely regulated beyond a regulation range of the discharge amount of each dispenser. Moreover, the dispenser control module 107 performs control such that the application targets AP1, AP2, and AP3 and the application targets AP4, AP5, and AP6 to be displaced from each other in the circumferential direction, and thereby the application area of the adhesive 9 can be more widely adjusted beyond a regulation range of the discharge amount of each dispenser. In a state in which core pieces 4 are bonded together via the adhesive 9, the bonding device 12 may adjust the application area of the adhesive 9 such that the shape of a range in which the adhesive 9 sticks fits with the outline of the core piece 4 in plan view. For example, by applying the adhesive 9 to a range surrounded by a line offset from the outline of the core piece 4, the bonding device 12 can cause the application area of the adhesive 9 after the core pieces 4 are bonded together to fit with the outline of the core piece 4. In this case, the bonding state of the core pieces 4 is more reliably maintained but the seepage of the adhesive 9 from between the core pieces 4 is suppressed.
(6) The bonding device 12 may apply the adhesive 9 to a core piece 4 such that the adhesive 9 in a state of sticking to the main surface 4a of the core piece 4 has a shape extending in a predetermined direction. For example, as illustrated in FIG. 12A, the bonding device 12 may apply the adhesive 9 to a core piece 4 such that the adhesive 9 has a shape extending along a radial direction the center of which is the center axis AX. After the adhesive 9 is supplied to the core piece 4 by the adhesive discharger 72, the rotation control module 108 may additionally rotate the actuator 71 so as to produce predetermined centrifugal force. By this operation, the adhesive 9 having a shape extending in the radial direction may be formed. For example, as illustrated in FIG. 12B, the bonding device 12 may apply the adhesive 9 to a core piece 4 such that the adhesive 9 has a shape extending along the circumferential direction the center of which is the center axis AX. After the adhesive 9 is dispensed to the core piece 4 by the adhesive discharger 72, the rotation control module 108 may additionally rotate the actuator 71 to accelerate or decelerate the actuator 71. By this operation, the adhesive 9 having a shape extending in the circumferential direction may be formed. The dispenser may be configured such that the angle that a discharge direction of the adhesive 9 from its nozzle forms with the main surface 4a of a core piece 4 is smaller than a right angle. In other words, the adhesive 9 may obliquely stick to the main surface 4a. With this configuration, the adhesive 9 may be applied to have a shape extending in a predetermined direction. In these cases, the bonding area of the adhesive 9 can be increased in a state before stacking to the core pieces 4, as compared to a case of restacking the core pieces 4 without making the adhesive 9 dispensed to the core pieces 4 extend.
(7) The bonding device 12 may apply the adhesive 9 to the main surface 4b but not the main surface 4a. The bonding device 12 may apply the curing agent 8 to the main surface 4b (bottom surface) and thereafter apply the curing agent 7 to the main surface 4a (top surface). The concentrations of the curing agent 7 and those of the curing agent 8 may be substantially the same. The concentrations of the curing agent 8 may be lower than those of the curing agent 7. The bonding device 12 may apply an curing agent to either the main surface 4a or the main surface 4b. The bonding device 12 may apply a curing agent to neither the main surface 4a nor the main surface 4b. The bonding device 12 may apply the curing agents 7 and 8 to the main surfaces 4a and 4b while rotating the core pieces 4. The size of the application area of the adhesive 9 in plan view may be substantially the same as that of the curing agent 7 or may be larger than that of the curing agent 7. When the application area of the adhesive 9 is larger than that of the curing agent 7, the adhesive 9 sticking to the core piece 4 is prevented from extending more than required.
(8) A plurality of liquid sources may be provided to each of the dispensers 73A, 73B, and 73C to individually dispense the adhesive 9. In this case, a viscosity of the adhesive 9 applied from each of the dispensers may be different from each other. For example, a viscosity of the adhesive 9 applied to the teeth pieces may be lower than that of the adhesive 9 applied to the yoke piece.
(9) The adhesive discharger 72 may include a single dispenser instead of the dispensers 73A, 73B, and 73C. The adhesive discharger 72 may include two dispensers or four or more dispensers. The dispensers may be provided in substantially the same positions in the circumferential direction. The dispensers may be structurally integrated. For example, an accommodation chamber for accommodating the adhesive 9 of each of the dispensers may be provided in a single housing.
(10) The dispensers 73A, 73B, and 73C may be configured to dispense substantially the same amount of the adhesive 9. The dispensers 73A, 73B, and 73C may be configured to dispense the smaller amount of the adhesive 9 as their distances from the rotation center CP increase. Any two of the dispensers 73A, 73B, and 73C may be configured to dispense the larger amount of the adhesive 9 as their distances from the rotation center CP increase. For example, the dispensers 73B and 73C may dispense substantially the same amount of the adhesive 9, and the dispenser 73A may dispense the larger amount of the adhesive 9 than each of the dispensers 73B and 73C does. The dispensers having such a relationship in the supply amount may be used to apply the adhesive 9 to the core piece 4 including the teeth pieces 6 whose widths intersecting the protruding direction as reaching the center axis AX are substantially the same.
(11) The dispenser control module 107 may control the dispensers 73A, 73B, and 73C, causing the dispensers 73A, 73B, and 73C to dispense the smaller amount of the adhesive 9 as their distances from the rotation center CP increase, irrespective of the relationship of larger or smaller in the supply amount of the adhesive 9 dispensed from each of the dispensers. The dispenser control module 107 may control any two of the dispensers 73A, 73B, and 73C, causing the two dispensers to dispense the larger amount of the adhesive 9 as their distances from the rotation center CP increase. For example, the dispenser control module 107 may control the dispensers 73A, 73B, and 73C, causing the dispensers 73B and 73C to dispense substantially the same amount of the adhesive 9 and the dispenser 73A to dispense the larger amount of the adhesive 9 than each of the dispensers 73B and 73C does. The dispenser control module 107 may control the dispensers 73A, 73B, and 73C, causing the dispensers 73A, 73B, and 73C to dispense the adhesive 9 to supplication targets while the rotation control module 108 performs the speed-increase control or the speed-reduction control.
(12) The adhesive discharger 72 may include a contact dispenser instead of the contactless dispensers 73A, 73B, and 73C. When a contact dispenser is used, the adhesive discharger 72 may allow an adhesive stick to a core piece 4 by making the adhesive appearing from the nozzle of the dispenser come into contact with the core piece 4 being rotated.
(13) The adhesive discharger 72 may allow an adhesive and a curing agent to stick to a core piece 4 simultaneously. The adhesive and the curing agent having stuck to a core piece 4 simultaneously may be mixed together at the time of (immediately after) sticking to the core piece 4, or may be mixed together when the core pieces 4 are stacked and compressed.
(14) The adhesive discharger 72 may dispense a thermosetting adhesive instead of the anaerobic adhesive 9. Alternatively, the adhesive discharger 72 may discharge, to a core piece 4, a second liquid adhesive having a capsule to which a first adhesive is injected. The second adhesive may have an adhesive strength enough to stick to a core piece 4. The first adhesive may have an adhesive strength greater than the second adhesive does. In this case, the capsule is held by the second adhesive until the core pieces 4 are compressed. When the core pieces 4 are compressed, the first adhesive gets out of the capsule, and the core pieces 4 are bonded together with a great adhesive strength. This prevents the adhesive from changing in quality by the time the core pieces 4 are compressed and enables the core pieces 4 to be bonded together more reliably.
(15) Instead of performing a rotational stack while changing the rotation angles for each core piece 4 in the applicator 70, a rotational stack may be performed at a step different from the application step performed in the applicator 70. The bonding device 12 may apply the adhesive 9 to the main surface 4b of a core piece 4. The bonding device 12 may apply the adhesive 9 to both of the main surface 4a and the main surface 4b of a core piece 4. The bonding device 12 may turn upside down and restack core pieces 4 after applying the adhesive 9 to at least one of the main surface 4a and the main surface 4b of the core piece 4.
(16) The separation assistor 20 may assist a core piece 4 in separating with a magnetic force instead of air blown by the blower 22. For example, the separation assistor 20 may include a magnet (electromagnet) provided so as to surround the temporary stack 14. In this case, the core piece 4 that is the top layer of the temporary stack 14 may be assisted in separating with a magnetic force produced by the magnet. The separation assistor 20 may use the blower 22 and a magnet for assisting a core piece 4 in separating in combination. The manufacturing apparatus 10 may blow air from the blower 22 in the separation assistor 20 of the bonding device 12 in order to remove oil that stuck to each core piece 4 in the blanking device 11. Alternatively, the manufacturing apparatus 10 may perform a heat (annealing) treatment on the temporary stack 14 in order to remove the oil before the bonding device 12 starts the processes, or may use the blowing of air from the blower 22 and the above-described heat treatment in combination.
(17) The stack formed by being stacked via an adhesive by the bonding device 12 is not limited to a core for a stator but may be, for example, a core for a rotor. The stack formed by being stacked via an adhesive by the bonding device 12 may be an intermediate constituting a motor core (stacked core) of a core for a stator and a core for a rotor. The bonding device 12 may stack, via an adhesive, a plurality of sheets (for example, metal sheets) blanked to a desired shape by the blanking device 11. That is, the stack is one formed by stacking the sheets blanked to a desired shape by the blanking device 11.
(18) A core for stator stacked by the bonding device 12 may be a divided core formed of a plurality of divided cores obtained by dividing an annular core in the circumferential direction. In particular, a divided core may be a core (what is called an annular lanced core) formed by, when core pieces of each layer are blanked from a material, lancing boundaries between core pieces of divided cores adjacent to each other and coupling the boundaries with pushback, blanking the relevant core pieces in a circular fashion as one body, and stacking the relevant blanked core pieces. When a blanking device blanks the sheets forming a temporary stack corresponding to the relevant annular lanced core, a rotational stack may or may not be performed in a die of the blanking device. In the temporary stack of the sheets formed after being blanked by the blanking device, temporal interlocking may or may not be used.

### Second Embodiment

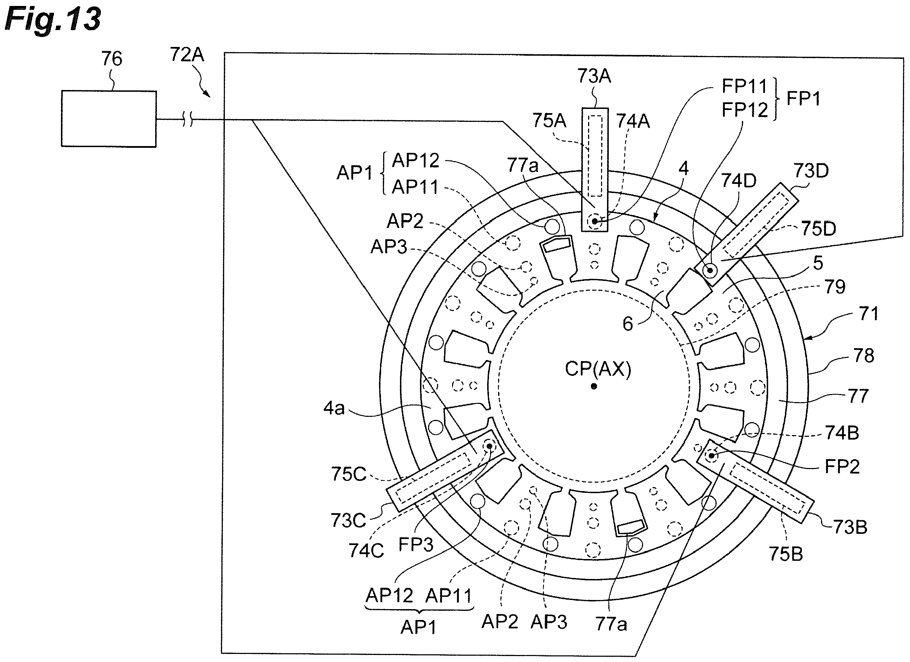

Next, with reference to FIG. 13, an adhesive discharger 72A included in an apparatus for manufacturing the stator core 1 according to the second embodiment will be described. The adhesive discharger 72A is different from the adhesive discharger 72 in further including a dispenser 73D configured to dispense the yoke piece 5 with the adhesive 9. Specifically, the adhesive discharger 72A includes the dispenser 73A (a first dispenser), the dispenser 73D (a second dispenser), and the dispensers 73B and 73C, as illustrated in FIG. 13. The dispensers 73A to 73D may be disposed on different positions from each other in the circumferential direction surrounding the rotation center CP. The dispenser 73A and the dispenser 73D each dispense the adhesive 9 to a plurality of supply positions whose distances from the rotation center CP in the direction of the radius are the same.

Specifically, the dispenser 73A dispenses the adhesive 9 to a supply position FP11 (first supply position) and the dispenser 73D dispenses the adhesive 9 to a supply position FP12 (second supply position). The supply position FP11 and the supply position FP12 have the same distances from the rotation center CP. The supply position FP11 and the supply position FP12 are positioned on a surface of a yoke piece 5. A surface of a yoke piece 5 is where the yoke piece 5 of the main surface 4a of a core piece 4 is positioned. The dispensers 73A and 73D may be configured to dispense substantially the same amount of the adhesive 9 from the nozzle 74A and a nozzle 74D, or may be configured to dispense a different amount of the adhesive 9 from the nozzle 74A and the nozzle 74D, respectively.

On the surface of the yoke piece 5, the dispenser control module 107 causes one of the dispensers 73A and 73D to dispense the adhesive 9 every time each of the application targets AP1, which are set on the same circumference surrounding the rotation center CP, reaches either of the supply positions FP11 and FP12. The application targets AP1 includes a plurality of application targets AP11 assigned to the dispenser 73A and a plurality of application targets AP12 assigned to the dispenser 73D. The dispenser control module 107 causes the dispenser 73A to dispense the adhesive 9 every time the application targets AP11 reach the supply position FP11. The dispenser control module 107 causes the dispenser 73D to dispense the adhesive 9 every time the application targets AP12 reach the supply position FP12.

The dispenser control module 107 may control the dispensers 73A and 73D, causing the supply amount of the adhesive 9 to each of the application targets AP11 to be substantially the same as the supply amount of the adhesive 9 to each of the application targets AP12. The dispenser control module 107 may control the dispensers 73A and 73D, causing the supply amount of the adhesive 9 to each of the application targets AP11 to be different from the supply amount of the adhesive 9 to each of the application targets AP12.

The application targets AP1 may be set to have equal intervals. The number of application targets AP11 and that of application targets AP12 may be the same or may be different from each other. On the above-described circumference surrounding the rotation center CP, the application targets AP11 and the application targets AP12 may be disposed alternately. For example, in the circumferential direction, n number of (n is an integer equal to or greater than 1) application targets AP11 and m number of (m is an integer equal to or greater than 1) application targets AP12 may be disposed alternately. The application targets AP11 and AP12 may each be uniformly disposed in the circumferential direction. The uniform disposition means the number of application targets included in a unit length in the circumferential direction is fixed.

For example, both n and m may be 1. Specifically, as illustrated in FIG. 13, in the above-described circumferential direction, the application targets AP11 and AP12 may be disposed such that one application target portion AP11 and one application target portion AP12 are repeated alternately. In this example, the application targets AP11 are disposed to have equal intervals in the circumferential direction, and the application targets AP12 are disposed to have equal intervals in the circumferential direction.

The arrangements of the application targets AP11 and the application targets AP12 are not limited to the above-described example. For example, each of the application targets AP11 and each of the application targets AP12 may be set to at least partially overlap each other in plan view. In this example, the application targets AP11 and the application targets AP12 may coincide. In other words, one and the same application target portion AP1 may be allocated to both of the application target portion AP11 and the application target portion AP12. The application target portion AP11 and the application target portion AP12 overlapping each other may be set in substantially the same position in the circumferential direction or may be displaced from each other in the circumferential direction.

The dispenser control module 107 may cause the dispenser 73A to dispense the adhesive 9 to each of the application targets AP11 and cause the dispenser 73D to dispense the adhesive 9 to each of the application targets AP12 at substantially the same timing or at different timings. The dispenser control module 107 may control each of the dispensers 73A and 73D, causing a performance period during which the adhesive 9 is dispensed to all of the application targets AP11 and a performance period, during which the adhesive 9 is dispensed to all of the application targets AP12 to at least partially overlap each other.

On surfaces of teeth pieces 6, the dispenser control module 107 causes the dispenser 73B to dispense the adhesive 9 to each of the application targets AP2 set on the same circumference surrounding the rotation center CP, as with the adhesive discharger 72. Surfaces of teeth pieces 6 are where the teeth pieces 6 of the main surface 4a of a core piece 4 are positioned. On the surfaces of the teeth pieces 6, the dispenser control module 107 causes the dispenser 73C to dispense the adhesive 9 to each of the application targets AP3 set on the same circumference surrounding the rotation center CP. In the example illustrated in FIG. 13, the number of application targets AP1 (total of the number of application targets AP11 and that of application targets AP12) may be greater than that of the application targets AP2 and may be greater than that of the application targets AP3.

As with the adhesive discharger 72, in each of the supply positions, both of the supply amount of the adhesive 9 dispensed from the dispenser 73A and that of the adhesive 9 dispensed from the dispenser 73D may be larger than that of the adhesive 9 dispensed from the dispenser 73B and may be larger than that of the adhesive 9 dispensed from the dispenser 73C. The relationship of larger or smaller in the supply amount may be achieved by a configuration of dispensers and may be achieved by control made by the dispenser control module 107.

The adhesive discharger 72A may further include one or more different dispensers configured to dispense the adhesive 9 to the application targets AP1. The adhesive discharger 72A may include two or more dispensers configured to dispense the adhesive 9 to the application targets AP2. In this case, the dispenser control module 107 may control the two or more dispensers as with the dispensers 73A and 73D, causing the two or more dispensers to dispense the adhesive 9 to the application targets AP2. The adhesive discharger 72A may include two or more dispensers configured to dispense the adhesive 9 to the application targets AP3. In this case, the dispenser control module 107 may control the two or more dispensers as with the dispensers 73A and 73D, causing the two or more dispensers to dispense the adhesive 9 to the application targets AP3. On the surfaces of the teeth pieces 6, when two or more dispensers dispense the adhesive 9 to the application targets set on the same circumference, the adhesive discharger 72A may dispense the adhesive 9 to the application targets AP1 from one dispenser.

The dispenser 73A and the dispenser 73D may be disposed to be separated from each other by 180 degrees in the circumferential direction surrounding the rotation center CP. The application targets AP11 may be set in one half-circle portion included in the same circumference surrounding the rotation center CP, and the application targets AP12 may be set in the other half-circle portion. In this configuration, even if the rotation angle of a core piece 4 is less than a turn (for example, approximately a half circle), all of the application targets AP1 pass either of the supply position FP11 of the dispenser 73A and the supply position FP12 of the dispenser 73D. For this reason, the rotation angle of a core piece 4 in which the adhesive 9 is applied to all of the application targets AP1 set on the yoke piece 5 can be reduced.

In the apparatus for manufacturing the stator core 1 according to the second embodiment, the dispenser 73A dispenses the adhesive 9 to the supply position FP11 and the dispenser 73D dispenses the adhesive 9 to the supply position FP12, the supply positions FP11 and FP12 having the same distance from the rotation center CP. This method can also improve evenness in applying the adhesive 9, as with the manufacturing apparatus 10 and the manufacturing method according to the first embodiment. In addition, on the circumference where the supply positions FP11 and FP12 are positioned, the dispensers can share the job of supplying the adhesive 9. Thus, the adhesive 9 can be efficiently dispensed within a performance range of the individual dispensers.

For example, the dispenser 73A dispenses the adhesive 9 to the supply position FP11 and the dispenser 73D dispenses the adhesive 9 to the supply position FP12, the supply positions FP11 and FP12 having the same distance from the rotation center CP. On the main surface 4a of a core piece 4, the rotation control module 108 rotates the core piece 4 such that the application targets AP1 set on the same circumference surrounding the rotation center CP pass the supply position FP11 and the supply position FP12. When the dispensers 73A and 73D dispense the adhesive 9 to the supply positions FP11 and FP12, respectively, the dispenser control module 107 causes the dispenser 73A to dispense the adhesive 9 every time the positions of the application targets AP1, assigned to the dispenser 73A (application targets AP11) reach the supply position FP11. The dispenser control module 107 also causes the dispenser 73D to dispense the adhesive 9 every time the positions of the application targets AP1, assigned to the dispenser 73D (application targets AP12) reach the supply position FP12. In this configuration, the dispensers 73A and 73D can share the job of supplying the adhesive 9 to the application targets AP1 positioned on the same circumference. Thus, the adhesive 9 can be efficiently dispensed within a performance range of the individual dispensers 73A and 73D.

The adhesive discharger 72A includes at least one dispenser (dispenser 73B or dispenser 73C) configured to dispense the adhesive 9 to the surfaces of the teeth pieces 6, and the dispensers 73A and 73D configured to dispense the adhesive 9 on the surface of the yoke piece 5. The dispenser control module 107 causes the dispenser 73B to dispense the adhesive 9 to the supply position FP2 and causes the dispenser 73C to dispense the adhesive 9 to the supply position FP3. The dispenser control module 107 causes the dispensers 73A and 73D to dispense the adhesive 9 to the supply positions FP11 and FP12 (supply position FP1), respectively. The supply positions FP11 and FP12 (supply position FP1) have the same distance from the rotation center CP. The yoke piece 5 has larger application areas of the adhesive 9 in the circumferential direction than the teeth pieces 6 do. The dispensers can share the job of supplying the adhesive 9 to these application areas on the circumference where the supply positions FP11 and FP12 provided on the yoke piece 5 are positioned. Thus, the adhesive 9 can be efficiently dispensed within a performance range of the individual dispensers.

For example, on the surface of the yoke piece 5, the application targets AP1 are set on the same circumference surrounding the rotation center CP. The dispenser control module 107 causes the dispenser 73A to dispense the adhesive 9 every time the application targets AP11 reach the supply position FP 11. The dispenser control module 107 also causes the dispenser 73D to dispense the adhesive 9 every time the application targets AP12 reach the supply position FP12. In this configuration, the dispensers 73A and 73D can share the job of supplying the adhesive 9 to the application target portion AP1 positioned on the same circumference on the yoke piece 5. Thus, the adhesive 9 can be efficiently dispensed within a performance range of the individual dispensers 73A and 73D.

### Modification

(1) The rotation stage 77 of the adhesive discharger 72A may include a function for holding a core piece 4 with a negative pressure or a magnetic force produced by an electromagnet. For example, the rotation control module 108 of the controller 100 may cause the rotation stage 77 to hold a core piece 4 with a magnetic force or a negative pressure while controlling the rotation driver 78 to rotate the core piece 4. Consequently, a core piece 4 can be rotated in a state of being held more reliably at the time of the rotational application of the adhesive 9.
(2) The dispensers 73A to 73D may each be configured to discharge the adhesive 9 in a state of being heated. For example, the dispensers 73A to 73D may each discharge the adhesive 9 in a state of being heated to a temperature higher than a room temperature. The temperature to which the adhesive 9 is heated may be determined depending on the materials making up the adhesive 9, and may be set to approximately 30 °C to 50 °C as an example. The dispensers 73A to 73D may each include a head portion provided with the respective nozzles 74A to 74D, and may each include a heater configured to heat the adhesive 9. The heater may be provided to the head portion. Since the adhesive 9 is discharged in a state of being heated, the adhesive 9 can be stably discharged from the dispenser. For example, this configuration can reduce an occurrence of a defect that the adhesive 9 is not discharged from the dispenser. Since the adhesive 9 is heated in the head portions, the adhesive 9 to be discharged can be heated more reliably. Moreover, the adhesive 9 can be prevented from changing in quality by the time of reaching the head portion.
(3) A direction to which the adhesive 9 is discharged from the dispenser (hereinafter, referred to as "discharge direction AD") may not to be orthogonal to the main surface 4a of a core piece 4. For example, in a state in which the main surface 4a of a core piece 4 is horizontal, the discharge direction AD of the dispenser may be inclined with respect to the direction orthogonal to the main surface 4a. In a state in which the discharge direction AD of the dispenser is a vertical direction, the main surface 4a of the core piece 4 on the rotation stage 77 may be inclined with respect to the horizontal direction. In a state in which the discharge direction AD of a dispenser 173 is inclined with respect to the vertical direction and the main surface 4a is inclined with respect to the horizontal direction, the angle that the discharge direction AD forms with the main surface 4a may be narrower than 90 degrees. Inclining the discharge direction AD may adjust extension of the stick areas of the adhesive 9.

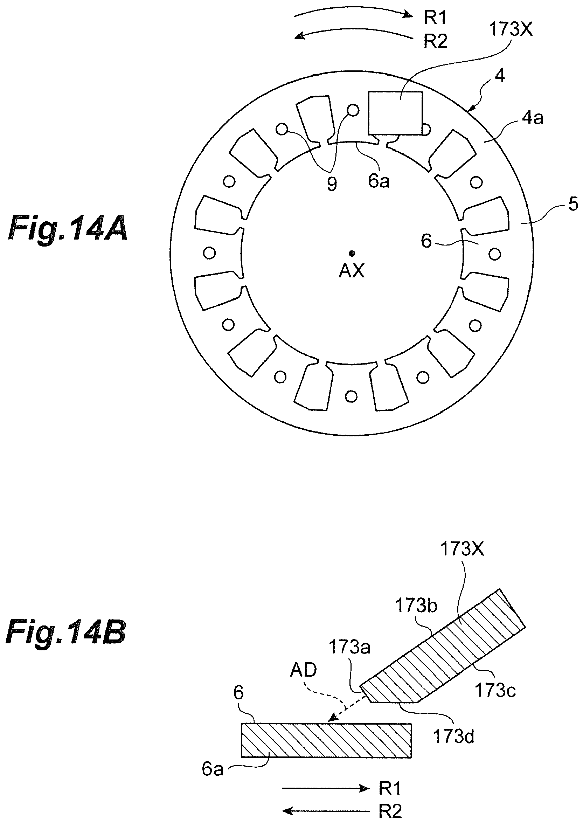

For example, FIG. 14A and FIG. 14B illustrate a case when the discharge direction AD is inclined in order to prevent the extension of the stick areas of the adhesive 9 caused by the rotation of a core piece 4. The dispenser 173X illustrated in FIG. 14A and FIG. 14B is inclined such that the horizontal component of the discharge direction AD follow the moving direction of the core piece 4. It is supposed that the adhesive 9 discharged from the dispenser heads toward the core piece 4 in a form of a line before reaching the core piece 4 (in between the main surface 4a of the core piece 4 and the dispenser). Accordingly, due to the movement of the core piece 4 after the head of a linear adhesive 9 reaches the main surface 4a and until the tail of the linear adhesive 9 reaches the main surface 4a, the adhesive 9 may stick to the main surface 4a in a state of extending in the moving direction of the core piece 4.

The extension of the stick areas of the adhesive 9 may be reduced by making the horizontal component of the discharge direction AD face in the opposite direction to the moving direction of the core piece 4. When the core piece 4 on the rotation stage 77 rotates in a direction shown by arrow R1 illustrated in FIG. 14A and FIG. 14B, the dispenser 173X may discharge the adhesive 9 such that the discharge direction AD includes a component facing in the opposite direction to the direction shown by arrow R1. When the adhesive 9 is discharged in a state in which the discharge direction AD is inclined, the moving direction of the linear adhesive 9 includes a drop component facing a vertically lower direction in addition to the the horizontal component of the discharge direction AD. When the adhesive 9 is discharged such that the discharge direction AD includes a component facing in the opposite direction to the moving direction of the core piece 4, a drop position of the tail of a lump of adhesive 9 is shifted in the moving direction as compared with a drop position of the head. The shifting of the drop position of the tail in the moving direction reduces the differences between the stick positions of the adhesive 9 to the core piece 4. Consequently, the extension of the stick areas of the adhesive 9 caused by the difference of a timing of dropping may be prevented.

It can be also conceived that the stick area of the adhesive 9 extends with the kinetic energy of the adhesive 9 in the horizontal direction with respect to the core piece 4. In regard to this, by making the horizontal direction component of the discharge direction AD face in the same direction as the moving direction of the core piece 4, the stick area of the adhesive 9 can be prevented from extending. When the core piece 4 on the rotation stage 77 rotates in a direction shown by arrow R2 illustrated in FIG. 14A and FIG. 14B, the dispenser 173X may discharge the adhesive 9 such that the discharge direction AD includes a component facing the direction shown by arrow R2 of the core piece 4.

In this case, the relative kinetic energy of the adhesive 9 with respect to the core piece 4 becomes smaller. This can prevent the extension of the stick areas of the adhesive 9 caused by the kinetic energy in the horizontal direction of the adhesive 9 with respect to the core piece 4. The direction to which the horizontal direction component of the discharge direction AD is made to face between the moving direction of the core piece 4 and its opposite direction in order to prevent the extension of the stick areas of the adhesive 9 varies depending on conditions such as a property of the adhesive 9. Since the stick areas of the teeth pieces 6 are small in the circumferential direction, the adhesive 9 may spread beyond the teeth pieces 6 if the stick areas of the adhesive 9 extend. For this reason, the above described two methods are effective in dispensing the adhesive 9 to the teeth pieces 6.

The stick areas of the adhesive 9 can even be extended on purpose by inclining the discharge direction AD to the direction opposite to the direction for suppressing the extension. The stick area of the adhesive 9 can also be extended by inclining the discharge direction AD with respect to the radial direction of the core piece 4.

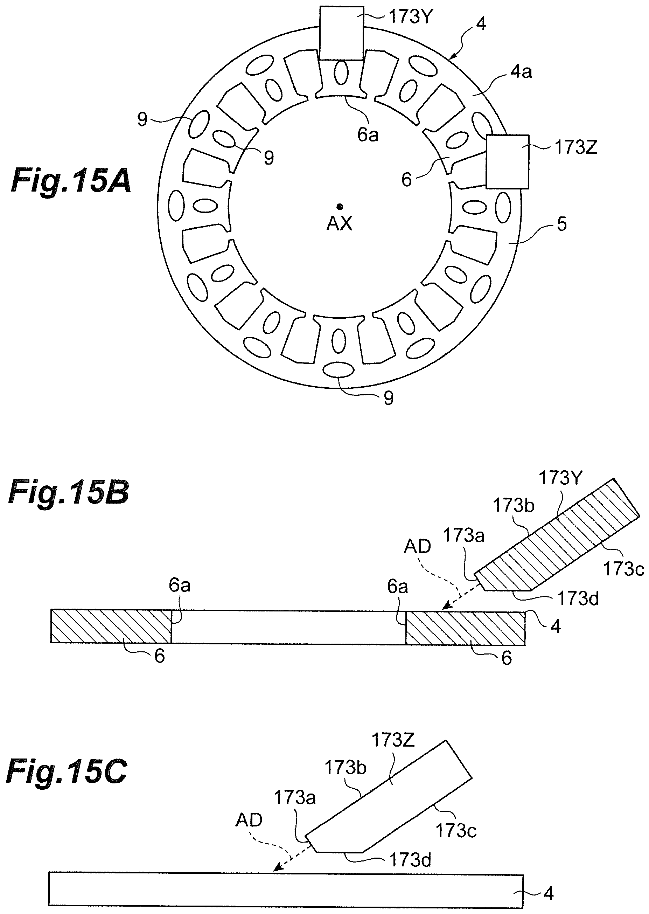

A dispenser 173Y illustrated in FIG. 15A and FIG. 15B inclines such that the horizontal direction component of the discharge direction AD follows the radial direction of the core piece 4. The dispenser 173Y supplies the teeth pieces 6 with the adhesive 9. A dispenser 173Z illustrated in FIG. 15A and FIG. 15C inclines such that the horizontal direction component of the discharge direction AD follows the moving direction of the core piece 4. The direction to which the horizontal direction component of the discharge direction AD of the dispenser 173Z faces is set to be opposite to the direction for preventing the stick areas of the adhesive 9 from extending. The dispenser 173Z supplies the yoke piece 5 with the adhesive 9. With this configuration, the adhesive 9 can be applied to a wider area.

The dispenser may be inclined such that the horizontal direction component of the discharge direction AD follows a direction crossing both of the moving direction of the core piece 4 and the radial direction of the core piece 4. With this configuration, both the extension of the adhesive 9 in the moving direction of the core piece 4 and the extension of the adhesive 9 in the radial direction of the core piece 4 can be adjusted.

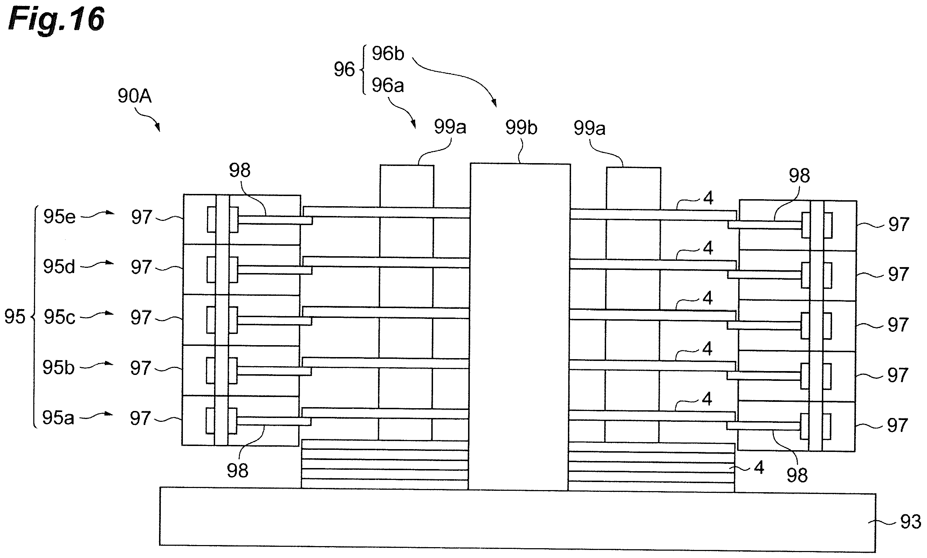

The dispensers 173X, 173Y, and 173Z, which are disposed obliquely, may include a recessed portion for avoiding interference with the core piece 4 arising from their oblique disposition. For example, the dispensers 173X, 173Y, and 173Z each include a discharge surface 173a, and side surfaces 173b and 173c. The discharge surface 173a is a surface from which a nozzle for the adhesive 9 opens. The discharge direction AD of the dispenser 173X is inclined, and thereby the side surface 173b is positioned at a higher level than the side surface 173c. The edge portion that the discharge surface 173a forms with the side surface 173c is chamfered. Thus, a facing surface 173d is formed as a recessed portion between the discharge surface 173a and the side surface 173c. The facing surface 173d faces the main surface 4a of the core piece 4. For example, the facing surface 173d crosses both of the discharge surface 173a and the side surface 173c. The facing surface 173d may be horizontal, or may be curved so as to project to either the inward side of or the outward side of the dispenser 173X. Since the discharge direction AD inclines from the orthogonal direction, an edge portion of the dispenser may interfere with the core piece 4. In this configuration, the facing surface 173d formed by chamfering is provided, thereby preventing the dispenser from coming into contact with the core piece 4 even when the discharge direction AD is inclined from the orthogonal direction.
(4) When blanking the core pieces 4, the blanking device 11 may use stamping oil including a curing agent, instead of the bonding device 12 applying the curing agents 7 and 8. For example, the blanking device 11 may apply the stamping oil on both sides of base material ES before the core piece 4 are blanked. The bonding device 12 may not include the application parts 30 and 50 and the inspection parts 40 and 60. The separation assistor 20 may not blow air to the temporary stack 14 in order to remove the stamping oil, but may blow air to the temporary stack 14 to the extent that the curing agent included in the stamping oil dries. In this configuration, the configuration of the bonding device 12 is simplified. In addition, drying of the curing agent can be accelerated after the curing agent is applied to the core piece 4 (more specifically, the area in which the core piece 4 is formed out of the base material ES) by the time the adhesive 9 is applied.
(5-1) The stack sensor 94 may measure the height of the uncompressed intermediate stack (the position of the height of the top surface of the intermediate stack) on the plate 93, instead of measuring the position of the plate 93 at the time of compression. The intermediate stack is an intermediate of the stator core 1 formed on the plate 93. The stack sensor 94 may include a contact displacement sensor configured to come into contact with the top surface of the intermediate stack to measure the height of the intermediate stack. Alternatively, the stack sensor 94 may include a contactless displacement sensor configured to irradiate a laser or the like to the top surface of the intermediate stack to measure the height of the intermediate stack.
(5-2) The processes of steps S01 to S13 are repeated, whereby the thickness of the intermediate stack formed by one or more core pieces 4 having been already stacked on the plate 93 is measured every time one core piece 4 is stacked in the stacker 90. The controller 100 may determine whether there is an abnormality in the intermediate stack on the basis of a measured value of the thickness. For example, the controller 100 may determine whether a foreign body is not included in the intermediate stack on the basis of a measured value of the thickness. If a difference between a measured value for this time and a measured value for the last time obtained from the last intermediate stack before the core piece 4 is stacked is greater than a predetermined value, the controller 100 may determine that a foreign body is included in the intermediate stack.
(5-3) After the number of core pieces 4 included in the intermediate stack has reached or exceeded a predetermined number, the controller 100 may measure the thickness of the intermediate stack using the stack sensor 94 every time one core piece 4 is stacked. For example, the controller 100 may determine that the number of core pieces 4 of the intermediate stack has reached or exceeded a predetermined number by counting the number of core pieces 4 forming the intermediate stack. Alternatively, the controller 100 may determine that the number of core pieces 4 of the intermediate stack has reached or exceeded a predetermined number using information acquired from a sensor configured to output a signal when the thickness of the intermediate stack reaches or exceeds a predetermined thickness.
   In the manufacturing apparatus 10, the blanking device 11 stacks the temporary stack 14 and thereafter the bonding device 12 restacks the core pieces 4, whereby forming the stator core 1. Hence, it is easy to adjust the thickness of the stator core 1 to fall within a setting range during the restack of the core pieces 4. When the thickness of the intermediate stack is measured every time one core piece 4 is stacked, a foreign body in the intermediate stack can be immediately detected. When the thickness of the intermediate stack is measured after the number of core pieces 4 has reached or exceeded a predetermined number, the frequency of use of the stack sensor 94 is reduced and deterioration of the stack sensor 94 is reduced accordingly. Reducing the frequency of use of the stack sensor 94 is advantageous especially when a contact displacement sensor is used.
(6) The bonding device 12 may include a stacker 90A illustrated in FIG. 16, instead of the stacker 90. The stacker 90A may stack three or more core pieces 4 without performing compression and thereafter compress the three or more core pieces 4. The three or more core pieces 4 may include the core piece 4 that is the top surface of an intermediate stack having been already formed on the plate 93. The stacker 90A may additionally stack at least two core pieces 4 on the intermediate stack and compress the at least two core pieces 4 and the core piece 4 that is the top surface of the intermediate stack in the stacking direction. In order to prevent the curing of the adhesive 9 from progressing during standby for the compression, the stacker 90A may include a mechanism for maintaining spaces between the core pieces 4 before compressing. For example, the stacker 90A may include the plate 93, a holder 95, and a positioning unit 96, as illustrated in FIG. 16. Although not illustrated in FIG. 16, the stacker 90A may include the receiver 92 and the stack sensor 94.

The holder 95 holds each of uncompressed core pieces 4 to which the adhesive 9 was applied. The holder 95 holds the uncompressed core pieces 4 at a high level separated from the plate 93 such that the main surfaces 4a and 4b become horizontal. The holder 95 may hold the core pieces 4 to which the adhesive 9 was applied in a state in which the core pieces 4 do not contact each other. The holder 95 includes, for example, a plurality of placing units 95a to 95e disposed so as to align along the vertical direction. The placing units 95a to 95e are disposed to be piled up in order from bottom to top along the vertical direction. Each of the placing units 95a to 95e includes a plurality of air cylinders 97. The air cylinders 97 are provided so as to be positioned on the outer circumference of the intermediate stack formed on the plate 93. For example, the air cylinders 97 may be provided to face each other in plan view, and the distances between the air cylinders 97 may be substantially the same as the diameter of the core piece 4.

The air cylinders 97 of the placing units 95a to 95e each operate in accordance with an operation instruction from the controller 100. The air cylinder 97 includes a piston rod 98 configured to reciprocate along the horizontal direction. The piston rod 98 functions as a holder member configured to temporarily hold a core piece 4. An operation for making the piston rod 98 move forth is performed in accordance with an operation instruction from the controller 100, whereby the piston rod 98 moves such that the piston rod 98 at least overlaps the core piece 4 in plan view. An operation for making the piston rod 98 move back is performed in accordance with an operation instruction from the controller 100, whereby the piston rod 98 moves so as not to overlap the core piece 4 in plan view.

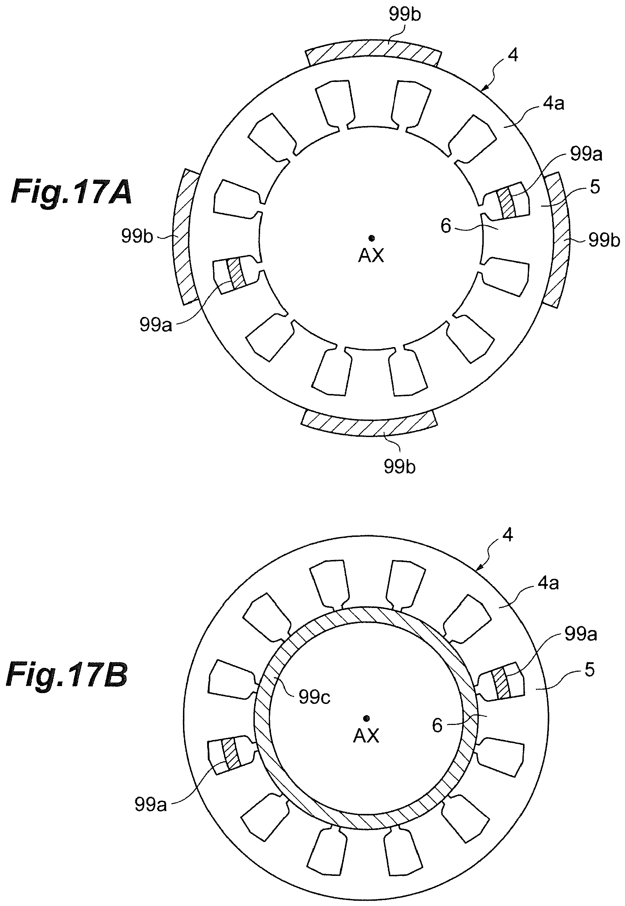

The positioning unit 96 is a jig for determining positions of each core piece 4 included in the stator core 1. For example, the positioning unit 96 may determine positions of each core piece 4 in the circumferential direction the center of which is the center axis Ax. The positioning unit 96 may determine positions of each core piece 4 in the direction of the radius the center of which is the center axis Ax. Determining positions of each core piece 4 means arranging the core pieces 4 included in the stator core 1 in predetermined positions. As illustrated in FIG. 16 and FIG. 17A, the positioning unit 96 may include a circumferential-direction positioning unit 96a and a radial-direction positioning unit 96b.

The circumferential-direction positioning unit 96a determines positions of each core piece 4 in the circumferential direction. The circumferential-direction positioning unit 96a may include, for example, a plurality of pins 99a as illustrated in FIG. 17A. The pins 99a are formed to extend in the vertical direction. The pins 99a may be provided to position between a pair of teeth pieces 6 adjacent to each other, as illustrated in FIG. 17A. The width of the pin 99a in the circumferential direction may be substantially the same as a set value of a gap between the pair of teeth pieces 6, or may be slightly greater than the set value.

The radial-direction positioning unit 96b determines positions of each core piece 4 in the direction of the radius. The radial-direction positioning unit 96b may determine positions of each core piece 4 from the outer circumference. The radial-direction positioning unit 96b may include, for example, a positioning member formed to surround the whole circumference of a core piece 4. Alternatively, the radial-direction positioning unit 96b may include a plurality of positioning members provided to be divided along the outer circumference of a core piece 4.

For example, the radial-direction positioning unit 96b may include a plurality of (here, four) pins 99b, as illustrated in FIG. 17A. The pins 99b are formed to extend in the vertical direction. As illustrated in FIG. 17A, the pins 99b may be provided in positions separated from each other by approximately 90 degrees in the circumferential direction. The pins 99b may be provided so as to contact the outer circumferential surface of a core piece 4. The distance between the inner circumferential surface of the pins 99b facing the center axis AX and the center axis AX may be substantially the same as a set value of the radius of the core piece 4, or may be slightly smaller than the set value of the radius of the core piece 4. Alternatively, the radial-direction positioning unit 96b may include a sizing member (sizing mechanism) configured to change the distance between the pin 99b and the core piece 4. Positioning of each core piece 4 in the direction of the radius is performed by the pins 99b, relative to the outside diameter of the core piece 4 (distance from the center axis AX to the outer circumferential surface).

The radial-direction positioning unit 96b may determine positions of each core piece 4 from the inner circumference. The radial-direction positioning unit 96b may include, for example, a positioning member formed to come into contact with the whole inner circumferential surface of a core piece 4. Alternatively, the radial-direction positioning unit 96b may include a plurality of positioning members provided to be divided along the inner circumferential surface of a core piece 4. For example, the radial-direction positioning unit 96b may include a tubular positioning member 99c, as illustrated in FIG. 17B. The positioning member 99c may be cylindrical. The positioning member 99c is formed to extend in the vertical direction.

The positioning member 99c may be provided so as to contact the inner circumferential surface of a core piece 4 (tips 6a of teeth pieces 6). The positioning member 99c may be formed to have a ring shape or a circular shape in plan view. The radius (outside diameter) of the positioning member 99c may be substantially the same as a set value of the inner diameter of the core piece 4 (distance from the center axis AX to the inner circumferential surface), or may be slightly greater than the set value of the inner diameter of the core piece 4. Positioning of each core piece 4 in the direction of the radius is performed by the positioning member 99c, relative to the inner diameter of the core piece 4. When including the positioning members provided to be divided along the inner circumferential surface of a core piece 4, the radial-direction positioning unit 96b may include a sizing member configured to change the distance between each of the positioning members and the inner circumferential surface of the core piece 4. As with the circumferential-direction positioning unit 96a, the radial-direction positioning unit 96b may include a pin disposed between teeth pieces 6 adjacent to each other, instead of the positioning member 99c.

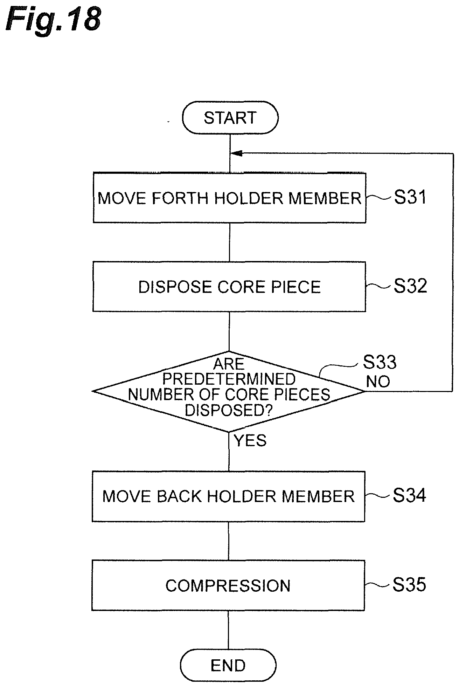

FIG. 18 is a flowchart depicting an example of a stacking process (restacking process) performed in the stacker 90A. First, the controller 100 performs step S31. For example, in step S31, the stack controller 110 controls one of the placing units 95a to 95e, causing the piston rods 98 of the air cylinders included in that placing unit to come out. The stack controller 110 causes the piston rod 98 included in the placing unit that is at the lowest position among the placing units 95a to 95e from which the piston rod 98 does not come out. For example, before performing step S31, when all of the piston rods 98 of the placing units 95a to 95e do not come out, the stack controller 110 causes the piston rod 98 of the placing unit 95a to come out.

The controller 100 then performs step S32. In step S32, for example, the stack controller 110 controls the holder 18G, causing the holder 18G to carry a core piece 4 in a state of having the adhesive 9 to the stacker 90A and to dispose (place) that core piece 4 on the piston rod 98 caused to come out in step S31. By this operation, one core piece 4 is disposed above the plate 93 or the intermediate stack.

The controller 100 then performs step S33. In step S33, the controller 100 determines whether the number of core pieces 4 disposed above the plate 93 has reached a predetermined number (integer equal to or greater than 2). When it is determined that the number of core pieces 4 has not reached a predetermined number, the controller 100 repeats steps S31 to S33. For example, when a predetermined number is set to a value greater than 5, one core piece 4 is disposed on the piston rods 98 of the placing units 95b to 95e in order by steps S31 to S33 being repeated. By this operation, as illustrated in FIG. 16, core pieces 4 in a state of having the adhesive 9 are disposed along the stack direction above the plate 93 (intermediate stack) such that the main surfaces face each other .

When it is determined that the number of core pieces 4 disposed above the plate 93 has reached a predetermined number, the controller 100 performs step S34. In step S34, for example, the stack controller 110 controls the air cylinders 97 of the placing units 95a to 95e, causing the air cylinders 97 to move back the piston rods 98. For example, the stack controller 110 may cause the air cylinders 97 of the placing units 95a to 95e to operate in order from top, may cause the air cylinders 97 of the placing units 95a to 95e to operate in order from bottom, or may cause the air cylinders 97 of the placing units 95a to 95e to operate at substantially the same timing. Thus, the core pieces 4 temporarily held above the plate 93 fall on the plate 93 or on the top surface of the intermediate stack having already been formed while their positions are determined by the positioning unit 96.

The controller 100 then performs step S35. In step S35, for example, the stack controller 110 controls the jack 91, causing the jack 91 to move the plate 93 closer to the receiver 92 and to compress, along the vertical direction (stacking direction), the core pieces 4 fell on the plate 93 or on the intermediate stack. In other words, the stack controller 110 causes the core pieces 4 temporarily held to be compressed against the plate 93. The controller 100 may repeat steps S31 to S35 until the thickness of the intermediate stack exceeds a set value. The controller 100 may allow the intermediate stack the thickness of which has exceeded the set value to be removed out of the bonding device 12 as a stator core 1. The controller 100 may repeat steps S31 to S35 until the thickness of the intermediate stack reaches a predetermined thickness that is smaller than the above-described set value. After the thickness of the intermediate stack has exceeded a predetermined thickness, the controller 100 may then control the stacker 90A, causing the stacker 90A to stack core pieces 4 one by one (to stack each of core pieces sequentially) on the intermediate stack.

In the stacker 90A, the distance between the piston rod 98 of the placing unit 95a and the plate 93 in the vertical direction may be greater than a set value of the thickness of the stator core 1. In this case, the holder 95 (placing unit 95a) may be provided on the plate 93. Alternatively, the stacker 90A may gradually increase the distance between the piston rod 98 of the placing unit 95a and the plate 93 in the vertical direction, as the thickness of the intermediate stack increases. The stacker 90A may include, for example, a lifting actuator configured to move the holder 95 in the vertical direction.

The stack controller 110 may use the positioning unit 96 to dispose the three or more core pieces 4 in a state of having the adhesive 9 above the plate 93. The stack controller 110 may use, for example, the friction between the pins 99a and 99b and the core pieces 4 to dispose the above-described three or more core pieces 4.
Alternatively, the stack controller 110 may place the three or more core pieces 4 on the plate 93 or on the intermediate stack such that the main surfaces of the core pieces 4 come into contact with each other. The stack controller 110 may then compress the core pieces 4 in the vertical direction. In these cases, the stacker 90A may not include the holder 95.

As described above, the stack controller 110 controls the stacker 90A, causing the stacker 90A to restack three or more core pieces 4 without compressing and to compress the restacked three or more core pieces 4. In this configuration, since three or more core pieces 4 are stacked and compressed collectively, the stator core 1 can be manufactured more efficiently than a case when core pieces 4 are stacked and compressed every time one core piece 4 is placed.
(7) The bonding device 12 illustrated in FIG. 3 may further include a processing part (sheet thickness measuring part) configured to measure the thickness of a core piece 4. This sheet thickness measuring part may be provided anywhere between two processing parts adjacent to each other in the steps from the separation assistor 20 to the applicator 70. For example, the sheet thickness measuring part may measure the thickness of a core piece 4 at a plurality of points (as an example, four points separated from each other by 90 degrees in the circumferential direction) on a main surface of the core piece 4. In this case, the controller 100 may calculate a sheet thickness deviation based on the sheet thickness at the four points, and determine whether to perform a rotational stack in the applicator 70 and the stacker 90 on the basis of the sheet thickness deviation, or determine an angle for the rotational stack (stop complete angle in the applicator 70) in accordance with the sheet thickness deviation. The sheet thickness measuring part may be disposed between the separation assistor 20 and the applicator 30. In this case, the thickness of a core piece 4 separated by the separation assistor 20 is measured. This makes it possible to inspect whether two or more core pieces 4 was separated in the separation assistor 20.
(8) The adhesive discharger 72 may dispense an adhesive hard to solidify under a normal atmosphere (for example, room temperatures), instead of the anaerobic adhesive 9. Examples of adhesives hard to solidify under a normal atmosphere include a thermosetting adhesive described above. The use of a thermosetting adhesive or other adhesives can prevent an adhesive from solidifying inside a dispenser and prevent a nozzle from clogging accordingly. When a thermosetting adhesive is used, the bonding device 12 may heat a stack in temperatures equal to or higher than room temperatures under a normal atmosphere and equal to or lower than 100 degrees, in order to cure that adhesive after restacking the core pieces 4 that were dispensed with the adhesive.

The apparatus for and the method of manufacturing the stator core 1 according to the second embodiment exemplified above may be applied to the first embodiment and the modifications thereof.

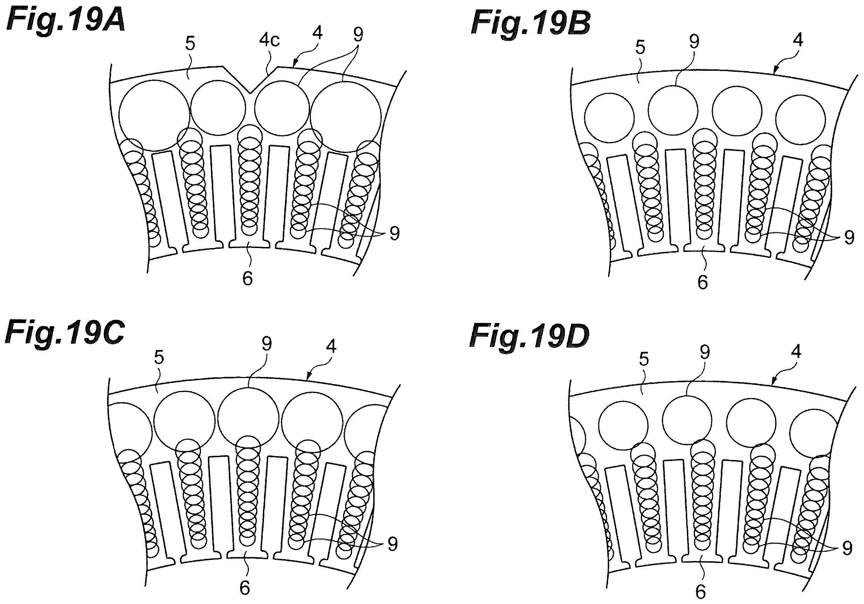

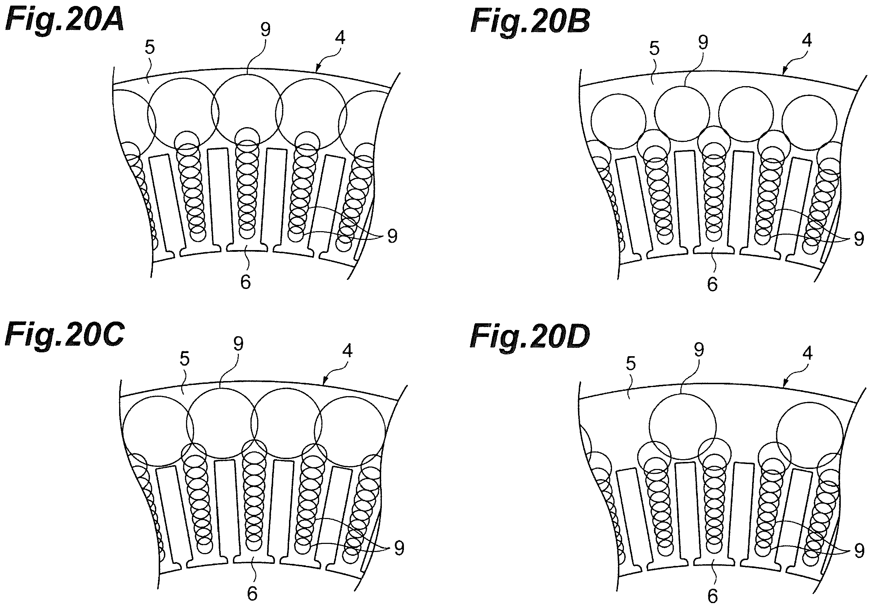

Next, with reference to FIG. 19A to FIG. 19D and FIG. 20A to FIG. 20D, the following will describe bonding areas of the adhesive 9 on the main surface 4a of a core piece 4 after being stacked and compressed in the stacker 90 or 90A. In the following description about the bonding areas of the adhesive 9, "the adhesive 9 on the core piece 4" means "the adhesive 9 on the core piece 4 after compressed" unless otherwise specified. In FIG. 19A to FIG. 19D and FIG. 20A to FIG. 20D, one circle denotes the adhesive 9 discharged from one dispenser to the relevant position.

In FIG. 19A, some spots of the adhesive 9 positioned on the yoke piece 5 and each of the teeth pieces 6 are illustrated. The adhesive dischargers 72 and 72A may each discharge the adhesive 9 from the dispenser to the core piece 4 such that some bonding areas of a plurality of spots of the adhesive 9 positioned on the same circumference differ from the others. As illustrated in FIG. 19A, a notch 4c may be formed in a core piece 4. The notch 4c is used to indicate a reference position of the core piece 4, for example. If the amount of the spots of the adhesive 9 positioned on the yoke piece 5 along the circumferential direction of the core piece 4 are the same, the adhesive 9 may spread beyond the core piece 4 at the notch 4c.

For this reason, the adhesive dischargers 72 and 72A may each discharge the adhesive 9 from the dispenser such that the amount of some spots of the adhesive 9 positioned near the notch 4c out of the spots of the adhesive 9 on the yoke piece 5 is smaller than that of the other spots of the adhesive 9 on the yoke piece 5, as illustrated in FIG. 19A. In this case, the adhesive 9 near the notch 4c may not connect with the adhesive 9 on the teeth pieces 6. The other spots of the adhesive 9 on the yoke piece 5 may connect with the adhesive 9 on the teeth pieces 6. The adhesive dischargers 72 and 72A may each discharge the adhesive 9 from the dispenser such that the positions of the spots of the adhesive 9 positioned near the notch 4c are closer to the center of the core piece 4 than those of the other spots of the adhesive 9 are. These positions of the spots of the adhesive 9 may be determined by the center position of the spots of the adhesive 9, for example. The adhesive dischargers 72 and 72A may each change at least one of the amount of and the position of the spots of the adhesive 9 positioned near the notch 4c as described above, and discharge the adhesive 9 from the dispenser. Alternatively, the adhesive dischargers 72 and 72A may not each discharge the adhesive 9 from the dispenser, near the notch 4c.

In FIG. 19B to FIG. 19D, some spots of the adhesive 9 positioned on the yoke piece 5 and each of the teeth pieces 6 are illustrated. The adhesive dischargers 72 and 72A may each discharge the adhesive 9 from the dispenser such that spots of the adhesive 9 on one teeth piece 6 connect with each other, as illustrated in FIG. 19B. Here, the adhesive 9 at least part of which is positioned on a teeth piece 6 is referred to as "the adhesive 9 on a teeth piece 6". In this case, the adhesive 9 positioned on a teeth piece 6 may not connect with the spots of the adhesive 9 positioned on the yoke piece 5 along the circumferential direction. In addition, the amount of the spots of the adhesive 9 on one teeth piece 6 may increase as the distance from the center axis AX increases along the radial direction of the core piece 4.

The adhesive dischargers 72 and 72A may each discharge the adhesive 9 from the dispenser such that the adhesive 9 on a teeth piece 6 and the adhesive 9 on the yoke piece 5 connect with each other. The following will exemplify the bonding areas when the adhesive 9 on a teeth piece 6 and the adhesive 9 on the yoke piece 5 connect with each other.

As illustrated in FIG. 19C, the spots of the adhesive 9 positioned along the circumferential direction of the yoke piece 5 may each be positioned to correspond to the teeth pieces 6. For example, in the circumferential direction of the core piece 4, the center position of the adhesive 9 on a teeth piece 6 may substantially coincide with the center position of the adhesive 9 on the yoke piece 5 corresponding to the relevant teeth piece 6. The outermost spot of the adhesive 9 out of the spots of the adhesive 9 on one teeth piece 6 may connect with a spot of the adhesive 9 on the yoke piece 5.

In the example of the bonding areas illustrated in FIG. 19D, the positions of the spots of the adhesive 9 on the yoke piece 5 in the circumferential direction are different from the example of the bonding areas illustrated in FIG. 19C. Specifically, in the circumferential direction of the core piece 4, the center position of the spots of the adhesive 9 on a teeth piece 6 may differ from that of the spot of the adhesive 9 on the yoke piece 5 corresponding to the relevant teeth piece 6.

In FIG. 20A to FIG. 20D, some spots of the adhesive 9 positioned on the yoke piece 5 and each of the teeth pieces 6 are illustrated. In the example of the bonding areas illustrated in FIG. 20A, the amount of the spots of the adhesive 9 on the yoke piece 5 is different from the example of the bonding areas illustrated in FIG. 19C. Specifically, the spots of the adhesive 9 on the yoke piece 5 may be disposed in the circumferential direction so as to connect with its adjacent spots of the adhesive 9.

In the example of the bonding areas illustrated in FIG. 20B, the positions of the spots of the adhesive 9 on the yoke piece 5 are different from the example of the bonding areas illustrated in FIG. 19C. Specifically, the spots of the adhesive 9 on the yoke piece 5 may each be positioned so as to correspond to a slot formed between teeth pieces 6 adjacent to each other. In this case, two spots of the adhesive 9 positioned on the teeth pieces 6 adjacent to each other may connect with one spot of the adhesive 9 on the yoke piece 5. In other words, the spots of the adhesive 9 adjacent to each other on the yoke piece 5 may connect with each other via a spot of the adhesive 9 on a teeth piece 6.

In the example of the bonding areas illustrated in FIG. 20C, the amount of the spots of the adhesive 9 on the yoke piece 5 is different from the example of the bonding areas illustrated in FIG. 20B. Specifically, the spots of the adhesive 9 on the yoke piece 5 may be disposed in the circumferential direction so as to connect with its adjacent spots of the adhesive 9. In other words, FIG. 20C illustrates an example of the bonding areas in which the connection relation of the adhesive 9 on the yoke piece 5 illustrated in FIG. 20A is combined with the connection relation of the adhesive 9 on the yoke piece 5 and the adhesive 9 on the teeth pieces 6 illustrated in FIG. 20B.

In the example of the bonding areas illustrated in FIG. 20D, the number of spots of the adhesive 9 formed on the yoke piece 5 is different from the example of the bonding areas illustrated in FIG. 20B. Specifically, the spots of the adhesive 9 on the yoke piece 5 may be disposed such that each spot of the adhesive 9 corresponds to a pair of teeth pieces 6 adjacent to each other. In other words, one spot of the adhesive 9 on the yoke piece 5 may correspond to a pair of teeth pieces 6, unlike in the example of the bonding areas illustrated in FIG. 20B.

In the foregoing, the bonding areas of the adhesive 9 after stacking and compressing has been described. However, the adhesive dischargers 72 and 72A may each discharge the adhesive 9 from the dispenser such that spots of the adhesive 9 corresponding to each other before stacking and compressing, which connect with each other after stacking and compressing, connect with each other. Alternatively, the adhesive dischargers 72 and 72A may each discharge the adhesive 9 from the dispenser such that spots of the adhesive 9 corresponding to each other before stacking and compressing do not connect with each other. The spots of the adhesive 9 may connect with each other after stacking and compressing. As with the examples described above, the bonding areas of the adhesive 9 can be optimized depending on a shape of core pieces 4 in plan view, thereby stabilizing the joining of the core pieces 4.

The specific examples described above includes the following configurations.
Note 1.
   A method of manufacturing a stack, the method comprising:
   rotating a sheet while holding the sheet;
   supplying an adhesive to a surface of the rotating sheet by a dispenser and thereby applying the adhesive to the sheet; and
   stacking the sheet to which the adhesive was applied.
Note 2.
   The method of manufacturing a stack according to note 1, wherein
   the applying of the adhesive includes supplying, by a plurality of dispensers, the adhesive to a surface of the rotating sheet, and
   the dispensers are provided at different positions around a rotation center of a rotation of the sheet.
Note 3.
   The method of manufacturing a stack according to note 1, wherein
   the rotating of the sheet while holding the sheet includes rotating the sheet such that a plurality of application target portions set on a surface of the sheet pass a supply position of the adhesive supplied by the dispenser, and
   the applying of the adhesive includes causing the dispenser to supply the adhesive every time each of the application target portions reach the supply position.
Note 4.
   The method of manufacturing a stack according to note 3, wherein
   the rotating of the sheet while holding the sheet includes performing speed-increase control for increasing a rotation speed of the sheet to a target speed, speed-maintaining control for maintaining the rotation speed of the sheet at the target speed, and speed-reduction control for reducing the rotation speed of the sheet, and
   the applying of the adhesive includes causing the dispenser to supply the adhesive to all of the application target portions in a state in which the rotation speed of the sheet is maintained at the target speed.
Note 5.
   The method of manufacturing a stack according to note 3 or 4, wherein
   the rotating of the sheet while holding the sheet includes rotating the sheet such that a rotation angle from a rotation start to a rotation stop is gradually changed for each sheet, and
   the stacking of the sheet includes stacking the sheets in a state in which a difference of the rotation angle of the sheets are maintained.
Note 6.
   The method of manufacturing a stack according to note 2, wherein
   the applying of the adhesive includes supplying the adhesive to each of a plurality of supply positions by the dispensers, the supply positions having different distances from the rotation center, and
   at least two of the dispensers are configured to supply the larger amount of the adhesive as distances from the rotation center to the supply positions increase.
Note 7. The method of manufacturing a stack according to note 2, wherein
   the rotating of the sheet while holding the sheet includes rotating the sheet such that a plurality of application target portions set on a surface of the sheet pass a supply position of the adhesive supplied by any of the dispensers,
   the sheet includes an annular yoke piece and a plurality of teeth pieces protruding from the yoke piece to an inner circumference side,
   the dispensers include a dispenser for yoke configured to supply the adhesive to the application target portion of the yoke piece and a dispenser for teeth configured to supply the adhesive to the application target portion of the teeth piece, and
   the applying of the adhesive includes
   causing any of the dispensers to supply the adhesive every time each of the application target portions reaches the supply position of the relevant dispenser, and
   controlling the dispenser for yoke and the dispenser for teeth to cause a number of the application target portions supplied with the adhesive by the dispenser for yoke to be greater than a number of the application target portions supplied with the adhesive by the dispenser for teeth.
Note 8.
   The method of manufacturing a stack according to note 2, wherein the applying of the adhesive includes supplying the adhesive to each of a plurality of supply positions by the dispensers, the supply positions having the same distance from the rotation center.
Note 9.
   The method of manufacturing a stack according to note 8, wherein
   the dispensers include a first dispenser configured to supply the adhesive to a first supply position and a second dispenser configured to supply the adhesive to a second supply position, the first supply position and the second supply position having the same distance from the rotation center,
   the rotating of the sheet while holding the sheet includes rotating the sheet such that a plurality of application target portions set on the same circumference surrounding the rotation center pass the first supply position and the second supply position, on a surface of the sheet, and
   the supplying of the adhesive to each of the supply positions by the dispensers, the supply positions having the same distance from the rotation center includes
   causing the first dispenser to supply the adhesive every time a portion of the application target portions, assigned to the first dispenser reaches the first supply position, and
   causing the second dispenser to supply the adhesive every time a portion of the application target portions, assigned to the second dispenser reaches the second supply position.
Note 10.
   The method of manufacturing a stack according to note 2, wherein
   the sheet includes an annular yoke piece and a plurality of teeth pieces protruding from the yoke piece to an inner circumference side,
   the dispensers includes at least one dispenser for teeth configured to supply the adhesive to a surface of the teeth piece and a plurality of dispensers for yoke configured to supply the adhesive to a surface of the yoke piece, and
   the applying of the adhesive includes
   supplying the adhesive at least one supply position by the at least one dispenser for teeth, and
   supplying the adhesive to each of a plurality of supply positions by the dispensers for yoke, the supply positions having the same distance from the rotation center.
Note 11.
   The method of manufacturing a stack according to note 10, wherein
   the dispensers for yoke include a first dispenser configured to supply the adhesive to a first supply position and a second dispenser configured to supply the adhesive to a second supply position, the first supply position and the second supply position having the same distance from the rotation center,
   the rotating of the sheet while holding the sheet includes rotating the sheet such that a plurality of application target portions set on the same circumference surrounding the rotation center pass the first supply position and the second supply position, on a surface of the yoke piece, and
   the supplying of the adhesive to each of the supply positions by the dispensers for yoke, the supply positions having the same distance from the rotation center includes
   causing the first dispenser to supply the adhesive every time a portion of the application target portions, assigned to the first dispenser reaches the first supply position, and
   causing the second dispenser to supply the adhesive every time a portion of the application target portions, assigned to the second dispenser reaches the second supply position.
Note 12.
   The method of manufacturing a stack according to any one of notes 3 to 5, wherein
   the rotating of the sheet while holding the sheet includes rotating the sheet such that the sheet rotates at least two turns, and
   the applying of the adhesive includes controlling the dispenser to cause the application target portion supplied with the adhesive during a first turn of the sheet and the application target portion supplied with the adhesive during a second turn of the sheet to at least overlap each other.
Note 13.
   The method of manufacturing a stack according to note 12, wherein the controlling of the dispenser and the causing of the application target portion of a first turn and the application target portion of a second turn to at least overlap each other includes controlling the dispenser to cause the application target portion supplied with the adhesive during a first turn of the sheet and the application target portion supplied with the adhesive during a second turn of the sheet to be displaced from each other.
Note 14.
   The method of manufacturing a stack according to any one of notes 1 to 13, the method further comprising applying a curing agent of the adhesive to both surfaces of the separated sheet, wherein
   the applying of the adhesive includes applying the adhesive to the sheet both surfaces of which have the curing agent.
Note 15.
   The method of manufacturing a stack according to note 14, wherein the applying of the curing agent includes applying, to a surface to which the adhesive is applied, the curing agent having a lower concentration, as compared with a surface to which the adhesive is not applied.
Note 16.
   The method of manufacturing a stack according to any one of notes 1 to 15, wherein the stacking of the sheet to which the adhesive was applied includes
   stacking three or more of the sheets without compressing, and
   compressing the stacked three or more of the sheets.
Note 17.
   An apparatus for manufacturing a stack, the apparatus comprising:
   an adhesive application part configured to apply an adhesive to a sheet; and
   a stack part configured to stack the sheet to which the adhesive application part applied the adhesive, wherein
   the adhesive application part includes
      a rotation holder configured to rotate the sheet while holding the sheet, and
      a dispenser configured to supply the adhesive to a surface of the sheet held by the rotation holder.

## Claims

1. A method of manufacturing a stack (1), the method comprising:
a sequence of operations including:
separating a sheet (4) from a temporary stack (14) of sheets (4);
rotating the sheet (4) after it has been separated; and
applying an adhesive (9) to the sheet (4), while it is being rotated, by dispensing the adhesive (9) to a surface (4a) of the sheet (4) by at least one dispenser (73A, 73B, 73C); and
restacking a plurality of the sheets (4), to which the adhesive (9) was applied by repeating the sequence of operations, to form a manufactured stack (1) of sheets (4).

2. The method according to claim 1, wherein
applying the adhesive (9) includes dispensing the adhesive (9) to the surface (4a) of the sheet (4) by a plurality of dispensers (73A, 73B, 73C), and
the dispensers (73A, 73B, 73C) are provided at different positions around a center (CP) of rotation of the sheet (4) and do not rotate with the sheet (4).

3. The method according to claim 1, wherein
rotating the sheet (4) includes rotating the sheet (4) such that predetermined application targets (AP1, AP2, AP3) of the surface (4a) of the sheet (4) sequentially pass a supply position (FP1, FP2, FP3) of the adhesive (9) dispensed by the dispenser (73A, 73B, 73C), and
applying the adhesive (9) includes dispensing a shot of the adhesive (9) by the dispenser (73A, 73B, 73C) in synchronization with an arrival of each of the application targets (AP1, AP2, AP3) to the supply position (FP1, FP2, FP3).

4. The method according to claim 3, wherein
rotating the sheet (4) includes accelerating a rotation speed of the sheet (4) to a target speed, maintaining the rotation speed of the sheet (4) at the target speed during a first period, and decelerating the rotation speed of the sheet (4) from the target speed, and
applying the adhesive (9) includes dispensing the adhesive (9) to all of the application targets (AP1, AP2, AP3) within the first period.

5. The method according to claim 3 or 4, wherein
rotating the sheet (4) includes rotating a first sheet by a first rotational angle during a first sequence of the operations,
the method further comprising rotating a second sheet by a second rotation angle during a second sequence of the operations, and
restacking the plurality of the sheets (4) includes restacking the first sheet and the second sheet so that a difference between the first rotation angle and the second rotation angle is maintained in the manufactured stack (1) of sheets (4).

6. The method according to claim 2, wherein
applying the adhesive (9) includes dispensing the adhesive (9) to a plurality of supply positions (FP1, FP2, FP3) by the plurality of dispensers (73A, 73B, 73C), the supply positions (FP1, FP2, FP3) located at different distances from the center (CP) of rotation,
the plurality of dispensers (73A, 73B, 73C) includes a first dispenser (73B, 73C) and a second dispenser (73A), a supply position (FP1) of the second dispenser (73A) is located further from the center (CP) of rotation than a supply position (FP2, FP3) of the first dispenser (73B, 73C), and
an amount of a shot of the adhesive (9) dispensed by the second dispenser (73A) is larger than an amount of a shot of the adhesive (9) dispensed by the first dispenser (73B, 73C).

7. The method according to claim 2, wherein
rotating the sheet (4) includes rotating the sheet (4) such that predetermined application targets (AP1, AP2, AP3) of the surface (4a) of the sheet (4) sequentially pass a supply position (FP1, FP2, FP3) of the adhesive (9) dispensed by one of the plurality of dispensers (73A, 73B, 73C),
the sheet (4) includes an annular yoke piece (5) and a plurality of teeth pieces (6) protruding from the yoke piece (5) to a center (AX) of the yoke piece (5),
the application targets (AP1, AP2, AP3) includes targets (AP1) on the yoke piece (5) and targets (AP2, AP3) on the teeth pieces (6),
the plurality of dispensers (73A, 73B, 73C) include a yoke adhesive dispenser (73A) configured to dispense the adhesive (9) to the targets (API) on the yoke piece (5) and a teeth adhesive dispenser (73B, 73C) configured to dispense the adhesive (9) to the targets (AP2, AP3) on the teeth pieces (6),
applying the adhesive (9) includes:
dispensing a shot of the adhesive (9) by the yoke adhesive dispenser (73A) in synchronization with an arrival of each of the targets (AP1) on the yoke piece (5) to the supply position (FP1) of the yoke adhesive dispenser (73A); and
dispensing a shot of the adhesive (9) by the teeth adhesive dispenser (73B, 73C) in synchronization with an arrival of each of the targets (AP2, AP3) on the teeth pieces (6) to the supply position (FP2, FP3) of the teeth adhesive dispenser (73B, 73C), and
the number of the targets (API) on the yoke piece (5) is larger than the number of the targets (AP2, AP3) on the teeth pieces (6).

8. The method according to any one of claims 3 to 5, wherein
rotating the sheet (4) includes rotating the sheet (4) such that the sheet (4) rotates several turns including a first turn and a second turn,
the application targets includes targets (AP1, AP2, AP3) for the first turn and targets (AP4, AP5, AP6) for the second turn,
applying the adhesive (9) includes:
dispensing a shot of the adhesive (9) by the dispenser (73A, 73B, 73C) in synchronization with an arrival of each of the targets (AP1, AP2, AP3) for the first turn to the supply position (FP1, FP2, FP3); and
dispensing a shot of the adhesive (9) by the dispenser (73A, 73B, 73C) in synchronization with an arrival of each of the targets (AP4, AP5, AP6) for the second turn to the supply position (FP1, FP2, FP3), and
the targets (AP4, AP5, AP6) for the second turn at least partially overlap the targets (AP1, AP2, AP3) for the first turn.

9. The method according to claim 8, wherein the targets (AP4, AP5, AP6) for the second turn deviate from the targets (AP1, AP2, AP3) for the first turn.

10. The method according to any one of claims 1 to 9, the method further comprising applying a curing agent (7, 8) of the adhesive (9) to both a first surface (4a) of the sheet (4) and to a second surface (4b) of the sheet (4) located on an opposite side of the sheet (4), wherein
applying the adhesive (9) includes applying the adhesive (9) to the first surface (4a) of the sheet (4) after applying the curing agent (7, 8) to both the first and second surfaces (4a, 4b) of the sheet (4).

11. The method according to claim 10, wherein
the adhesive (9) is not applied to the second surface (4b) of the sheet (4),
applying the curing agent (7, 8) includes applying a first curing agent (7) to the first surface (4a) and applying a second curing agent (8) to the second surface (4b), and
a concentration of the first curing agent (7) is lower than a concentration of the second curing agent (8).

12. An apparatus (10) for manufacturing a stack (1), the apparatus (10) comprising:
a separator (20, 18A) configured to separate a sheet (4) from a temporary stack (14) of sheets (4);
an adhesive applicator (70) configured to dispense an adhesive (9) to a surface (4a) of the sheet (4) that has been separated by the separator (20, 18A); and
a stacker (90) configured to restack a plurality of the sheets (4) to which the adhesive (9) was applied by the adhesive applicator (70) to form a manufactured stack (1) of sheets (4), wherein
the adhesive applicator (70) includes
an actuator (71) configured to rotate the sheet (4) after it has been separated by the separator (20, 18A), and
at least one dispenser (73A, 73B, 73C) configured to dispense the adhesive (9) to the surface (4a) of the sheet (4) while it is being rotated by the actuator (71).
